(19)

**Europäisches Patentamt**

**European Patent Office**

**Office européen des brevets**

(11) **EP 4 722 650 A1**

(12) **EUROPEAN PATENT APPLICATION**

(43) Date of publication:
08.04.2026  Bulletin 2026/15

(21) Application number: 25206776.4

(22) Date of filing: 06.10.2025

(51) International Patent Classification (IPC):
*G01C 21/00* (2006.01)    *G06V 20/56* (2022.01)

(52) Cooperative Patent Classification (CPC):
G01C 21/3822; G01C 21/3852; G06V 20/588

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: 07.10.2024  US 202418907602

(71) Applicant: HERE Global B.V.
5611 ZT Eindhoven (NL)

(72) Inventors:
• **Yu, Hai**
**San Diego, 92130 (US)**
• **Aroskar, Amey**
**North Aurora, 60542 (US)**
• **Chen, Qin**
**Chicago, 60606 (US)**

(74) Representative: **Potter Clarkson**
**Chapel Quarter**
**Mount Street**
**Nottingham NG1 6HQ (GB)**

(54) **METHOD, APPARATUS, AND SYSTEM OF PROVIDING LANE-LEVEL DIRECTION-OF-TRAVEL DETECTION FROM OVERHEAD IMAGERY**

(57)    An approach is provided for lane-level direction-of-travel detection from overhead imagery. The approach, for instance, involves processing overhead imagery data of a road network to determine a plurality of features indicative of a direction of travel of at least one road lane of the road network. Each feature of the plurality of features indicates a candidate direction of travel. The approach also involves determining the direction of travel of the at least one road lane based on a weighted voting mechanism applied based on the candidate direction of travel of each feature. The weighted voting mechanism weighs the candidate direction of travel of each feature based on a feature type of each feature. The approach further involves associating the determined direction of travel as an attribute of the at least one road lane in a geographic database.

FIG. 13A

FIG. 13B

FIG. 13C

FIG. 13D

EP 4 722 650 A1

**Description**

BACKGROUND

Direction-of-travel (DoT) information for road lanes can enable more accurate and efficient navigation and routing services. For example, knowing the DoT of each lane can help drivers plan their maneuvers ahead of time, avoid wrong-way driving, and reduce travel time and fuel consumption. Moreover, DoT information can also support advanced driver assistance systems (ADAS) and autonomous vehicles, which rely on high-definition maps to perceive and interact with the road environment. However, traditional map-making methods struggle to efficiently produce and maintain lane-level direction-of-travel (DoT) information. For example, traditional manual methods are often time-consuming and difficult to keep up-to-date, while methods using data from autonomous vehicles may have limited coverage and rely on expensive sensor packages. Accordingly, mapping service providers face significant technical challenges to acquiring DoT information for road networks quickly and efficiently, particularly for mapping large geographic areas.

SOME EXAMPLE EMBODIMENTS

Therefore, there is a need for an approach for providing lane-level direction-of-travel (DoT) information from overhead imagery data.

According to one embodiment, a method comprises processing overhead imagery data of a road network to determine a plurality of features indicative of a direction of travel of at least one road lane of the road network. Each feature of the plurality of features indicates a candidate direction of travel. The method also comprises determining the direction of travel of the at least one road lane based on a weighted voting mechanism applied based on the candidate direction of travel of each feature. The weighted voting mechanism weighs the candidate direction of travel of each feature based on a feature type of each feature. The method further comprises associating the determined direction of travel as an attribute of the at least one road lane in a geographic database.

According to another embodiment, an apparatus comprises at least one processor, and at least one memory including computer program code for one or more computer programs, the at least one memory and the computer program code configured to, with the at least one processor, cause, at least in part, the apparatus to process overhead imagery data of a road network to determine a plurality of features indicative of a direction of travel of at least one road lane of the road network. Each feature of the plurality of features indicates a candidate direction of travel. The apparatus is also caused to determine the direction of travel of the at least one road lane based on a weighted voting mechanism applied based on the candidate direction of travel of each feature. The weighted voting mechanism weighs the candidate direction of travel of each feature based on a feature type of each feature. The apparatus is further caused to associate the determined direction of travel as an attribute of the at least one road lane in a geographic database.

According to another embodiment, a non-transitory computer-readable storage medium carries one or more sequences of one or more instructions which, when executed by one or more processors, cause, at least in part, an apparatus to process overhead imagery data of a road network to determine a plurality of features indicative of a direction of travel of at least one road lane of the road network. Each feature of the plurality of features indicates a candidate direction of travel. The apparatus is also caused to determine the direction of travel of the at least one road lane based on a weighted voting mechanism applied based on the candidate direction of travel of each feature. The weighted voting mechanism weighs the candidate direction of travel of each feature based on a feature type of each feature. The apparatus is further caused to associate the determined direction of travel as an attribute of the at least one road lane in a geographic database.

According to another embodiment, an apparatus comprises means for processing overhead imagery data of a road network to determine a plurality of features indicative of a direction of travel of at least one road lane of the road network. Each feature of the plurality of features indicates a candidate direction of travel. The apparatus also comprises means for determining the direction of travel of the at least one road lane based on a weighted voting mechanism applied based on the candidate direction of travel of each feature. The weighted voting mechanism weighs the candidate direction of travel of each feature based on a feature type of each feature. The apparatus further comprises means for associating the determined direction of travel as an attribute of the at least one road lane in a geographic database.

According to one embodiment, a method comprises processing overhead imagery data of a road network to determine a plurality of grouped features indicative of a direction of travel of at least one road lane of the road network. The method also comprises determining a candidate direction of travel based on the pattern of features in each of the plurality of grouped features. The method further comprises determining a candidate direction of travel based on the pattern of features in each of the plurality of grouped features. The method further comprises associating the determined direction of travel as an attribute of the at least one road lane in a geographic database.

According to another embodiment, an apparatus comprises at least one processor, and at least one memory including computer program code for one or more computer programs, the at least one memory and the computer program code configured to, with the at least one processor, cause, at least in part, the apparatus to process overhead imagery data of a road network to determine a plurality of grouped features indicative of a direction of travel of at least one road lane of the road network. The apparatus is also caused to determine a candidate direction of travel based on the pattern of features in each of the plurality of grouped features. The apparatus is further caused to determine a candidate direction of travel based on the pattern of features in each of the plurality of grouped features. The apparatus is further caused to associate the determined direction of travel as an attribute of the at least one road lane in a geographic database.

According to another embodiment, a non-transitory computer-readable storage medium carries one or more sequences of one or more instructions which, when executed by one or more processors, cause, at least in part, an apparatus to process overhead imagery data of a road network to determine a plurality of grouped features indicative of a direction of travel of at least one road lane of the road network. The apparatus is also caused to determine a candidate direction of travel based on the pattern of features in each of the plurality of grouped features. The apparatus is further caused to determine a candidate direction of travel based on the pattern of features in each of the plurality of grouped features. The apparatus is further caused to associate the determined direction of travel as an attribute of the at least one road lane in a geographic database.

According to another embodiment, an apparatus comprises means for processing overhead imagery data of a road network to determine a plurality of grouped features indicative of a direction of travel of at least one road lane of the road network. The apparatus also comprises means for determining a candidate direction of travel based on the pattern of features in each of the plurality of grouped features. The apparatus further comprises means for determining a candidate direction of travel based on the pattern of features in each of the plurality of grouped features. The apparatus further comprises means for associating the determined direction of travel as an attribute of the at least one road lane in a geographic database.

According to one embodiment, a method comprises processing overhead imagery data of a road network to determine a plurality of features. The plurality of features is indicative of a direction of travel of at least one road lane of the road network based on a relative location of each feature of the plurality of features to the at least one road lane. The method also comprises determining the direction of travel of the at least one road lane based on a weighted voting mechanism applied based on the candidate direction of travel of each feature. The weighted voting mechanism weighs the candidate direction of travel of each feature based on a feature type of each feature. The method further comprises associating the determined direction of travel as an attribute of the at least one road lane in a geographic database.

According to another embodiment, an apparatus comprises at least one processor, and at least one memory including computer program code for one or more computer programs, the at least one memory and the computer program code configured to, with the at least one processor, cause, at least in part, the apparatus to process overhead imagery data of a road network to determine a plurality of features. The plurality of features is indicative of a direction of travel of at least one road lane of the road network based on a relative location of each feature of the plurality of features to the at least one road lane. The apparatus is also caused to determine the direction of travel of the at least one road lane based on a weighted voting mechanism applied based on the candidate direction of travel of each feature. The weighted voting mechanism weighs the candidate direction of travel of each feature based on a feature type of each feature. The apparatus is further caused to associate the determined direction of travel as an attribute of the at least one road lane in a geographic database.

According to another embodiment, a non-transitory computer-readable storage medium carries one or more sequences of one or more instructions which, when executed by one or more processors, cause, at least in part, an apparatus to process overhead imagery data of a road network to determine a plurality of features. The plurality of features is indicative of a direction of travel of at least one road lane of the road network based on a relative location of each feature of the plurality of features to the at least one road lane. The apparatus is also caused to determine the direction of travel of the at least one road lane based on a weighted voting mechanism applied based on the candidate direction of travel of each feature. The weighted voting mechanism weighs the candidate direction of travel of each feature based on a feature type of each feature. The apparatus is further caused to associate the determined direction of travel as an attribute of the at least one road lane in a geographic database.

According to another embodiment, an apparatus comprises means for processing overhead imagery data of a road network to determine a plurality of features. The plurality of features is indicative of a direction of travel of at least one road lane of the road network based on a relative location of each feature of the plurality of features to the at least one road lane. The apparatus also comprises means for determining the direction of travel of the at least one road lane based on a weighted voting mechanism applied based on the candidate direction of travel of each feature. The weighted voting mechanism weighs the candidate direction of travel of each feature based on a feature type of each feature. The apparatus further comprises means for associating the determined direction of travel as an attribute of the at least one road lane in a geographic database.

The following numbered paragraphs are also disclosed:

1. A method comprising:

processing overhead imagery data of a road network to determine a plurality of features indicative of a direction of travel of at least one road lane of the road network, wherein each feature of the plurality of features indicates a candidate direction of travel;

determining the direction of travel of the at least one road lane based on a weighted voting mechanism applied based on the candidate direction of travel of each feature, wherein the weighted voting mechanism weighs the candidate direction of travel of each feature based on a feature type of each feature; and

associating the determined direction of travel as an attribute of the at least one road lane in a geographic database.

2. The method of paragraph 1, wherein the feature type includes a vehicle feature type, and wherein the vehicle feature type infers the candidate direction of travel based on one or more vehicles detected in the overhead imagery.

3. The method of paragraph 2, wherein the candidate direction of travel is determined based spatial relationship data between the one or more vehicles detected in the overhead imagery and a topology of the at least one road lane.

4. The method of paragraph 2, wherein the one or more vehicles detected in the overhead imagery are grouped into in-lane-vehicles and neighboring-vehicles; wherein the in-lane-vehicles comprise the one or more vehicles that have a feature shape inside a surface of the at least one road lane; and wherein the neighboring-vehicles comprise the one or more vehicles that intersect with the surface of the lane over a threshold portion or that are next to the at least one road lane without being on the surface of the at least one road lane; and wherein the direction of travel is determined further based on the in-lane-vehicles and the neighboring-vehicles.

5. The method of paragraph 4, wherein the direction of travel is determined further based on a weighted majority vote of the in-lane-vehicles and the neighboring-vehicles.

6. The method of paragraph 1, wherein the feature type includes a directional indication feature type, and wherein the directional indication feature type infers the candidate direction of travel based on one or more directional indication features that are detected on the at least one road lane in the overhead imagery.

7. The method of paragraph 6, wherein the directional indication feature includes a directional category marker, a road sign, or a combination thereof.

8. The method of paragraph 1, wherein the feature type includes a relative location type; and wherein the relative location type infers the candidate direction of travel based on a geospatial relationship between a lane geometry of the at least one road lane and one or more road features.

9. The method of paragraph 8, wherein the geospatial relationship is based on a pattern or a sequence of the one or more road features relative to the lane geometry.

10. The method of paragraph 8, wherein the one or more road features includes road marking feature.

11. The method of paragraph 10, wherein the road marking feature includes a stopline, a yield indication, a crosswalk, or a combination thereof

12. The method of paragraph 10, further comprising:

grouping the stopline to the crosswalk, wherein the candidate direction of travel is based on a sequence of the stopline to the crosswalk in the grouping along a sequential direction of the at least one road lane.

13. An apparatus comprising:

at least one processor; and
at least one memory including computer program code for one or more programs,
the at least one memory and the computer program code configured to, with the at least one processor, cause the apparatus to:

process overhead imagery data of a road network to determine a plurality of features;
determine a pattern of features from the plurality of features;
determine a direction of travel based on the pattern of features; and
associate the determined direction of travel as an attribute of the at least one road lane in a geographic database.

14. The apparatus of paragraph 13, wherein the plurality of features groups a stopline feature to a crosswalk feature.

15. The apparatus of paragraph 14, wherein the direction of travel is based on a sequence of the stopline feature and the crosswalk feature in the plurality of features along a sequential direction of the at least one road lane.

16. The apparatus of paragraph 15, wherein the direction of travel is a forward direction based on detecting that the sequence is stopline-to-crosswalk; and wherein the candidate direction of travel is a backward direction based on detecting that the sequence is crosswalk-to-stopline.

17. A non-transitory computer-readable storage medium, carrying one or more sequences of one or more instructions which, when executed by one or more processors, cause an apparatus to perform:

processing overhead imagery data of a road network to determine one or more features;
determining a relative location of each feature of the one or more features to the at least one road lane;
determining a direction of travel of the at least one road lane based on the relative location; and
associating the determined direction of travel as an attribute of the at least one road lane in a geographic database.

18. The non-transitory computer-readable storage medium of paragraph 17, wherein the one or more features is a stopline, yield indication, or a combination thereof.

19. The non-transitory computer-readable storage medium of paragraph 17, wherein the at least one road lane comprises an end section; wherein the end section is a forward end section comprising a designated number of nodes or a designated distance occurring last in a sequential direction of the at least one road lane; and wherein the direction of travel is a forward direction of travel based on determining that the relative location is in the forward end section.

20. The non-transitory computer-readable storage medium of paragraph 17, wherein the at least one road lane comprises an end section; wherein the end section is a backward end section comprising a designated number of nodes or a designated distance occurring first in a sequential direction of the at least one road lane; and wherein the direction of travel is a backward direction of travel based on determining that the relative location is in the backward end section.

In addition, for various example embodiments described herein, the following is applicable: a computer program product may be provided. For example, a computer program product comprising instructions which, when the program is executed by a computer, cause the computer to perform any one or any combination of methods (or processes) disclosed.

In addition, for various example embodiments of the invention, the following is applicable: a method comprising facilitating a processing of and/or processing (1) data and/or (2) information and/or (3) at least one signal, the (1) data and/or (2) information and/or (3) at least one signal based, at least in part, on (or derived at least in part from) any one or any combination of methods (or processes) disclosed in this application as relevant to any embodiment of the invention.

For various example embodiments of the invention, the following is also applicable: a method comprising facilitating access to at least one interface configured to allow access to at least one service, the at least one service configured to perform any one or any combination of network or service provider methods (or processes) disclosed in this application.

For various example embodiments of the invention, the following is also applicable: a method comprising facilitating creating and/or facilitating modifying (1) at least one device user interface element and/or (2) at least one device user interface functionality, the (1) at least one device user interface element and/or (2) at least one device user interface functionality based, at least in part, on data and/or information resulting from one or any combination of methods or processes disclosed in this application as relevant to any embodiment of the invention, and/or at least one signal resulting from one or any combination of methods (or processes) disclosed in this application as relevant to any embodiment of the invention.

For various example embodiments of the invention, the following is also applicable: a method comprising creating and/or modifying (1) at least one device user interface element and/or (2) at least one device user interface functionality, the (1) at least one device user interface element and/or (2) at least one device user interface functionality based at least in part on data and/or information resulting from one or any combination of methods (or processes) disclosed in this application as relevant to any embodiment of the invention, and/or at least one signal resulting from one or any combination of methods (or processes) disclosed in this application as relevant to any embodiment of the invention.

In various example embodiments, the methods (or processes) can be accomplished on the service provider side or on the mobile device side or in any shared way between service provider and mobile device with actions being performed on both sides.

For various example embodiments, the following is applicable: An apparatus comprising means for performing a method of the claims.

Still other aspects, features, and advantages of the invention are readily apparent from the following detailed description, simply by illustrating a number of particular embodiments and implementations, including the best mode contemplated for carrying out the invention. The invention is also capable of other and different embodiments, and its several details can be modified in various obvious respects, all without departing from the spirit and scope of the invention. Accordingly, the drawings and description are to be regarded as illustrative in nature, and not as restrictive.

BRIEF DESCRIPTION OF THE DRAWINGS

The embodiments of the invention are illustrated by way of example, and not by way of limitation, in the figures of the accompanying drawings:

FIG. 1 is a diagram of a system capable of providing lane-level direction-of-travel (DoT) detection from overhead imagery, according to one example embodiment;

FIG. 2A is a diagram of an example of lane-level navigation, according to one example embodiment;

FIGs. 2B is a diagram of an example lane centerline representation for lanes of a road network, according to one example embodiment;

FIG. 2C is a diagram of example diverse types of lane topologies for DoT detection, according to one example embodiment;

FIG. 3 is a flowchart of a process for providing DoT detection from overhead imagery, according to one example embodiment;

FIG. 4 is a diagram of an example vehicle detection and heading angle regression, according to one example embodiment;

FIGs. 5A-5D are diagrams illustrating an example of DoT detection based on vehicles, according to one example embodiment;

FIG. 6 is a diagram of DoT voting from a single oriented vehicle (e.g., in-lane or neighboring), according to one example embodiment;

FIGs. 7A-7C are a flowchart of a process for weighted majority voting for a DoT attribute, according to one example embodiment;

FIG. 8 is a diagram of example direction indication features (DIFs) from on-lane marking signs, according to one example embodiment;

FIGs. 9A-9D are diagrams illustrating an example of DoT detection based on stopline and crosswalk geospatial patterns, according to one example embodiment;

FIGs. 10A and 10B are a flowchart of a process for inferring DoT from stopline and crosswalk geospatial patterns, according to one example embodiment;

FIGs. 11A and 11B are a flowchart of a process for inferring DoT from stopline features, according to one example embodiment;

FIG. 12 is a diagram of example stoplines at the end of lane sections, according to one example embodiment;

FIGs. 13A-13D are diagrams illustrating an example of DoT detection based on multiple feature types (e.g., a bag-of-features), according to one example embodiment;

FIG. 14 is a diagram of a geographic database, according to one embodiment;

FIG. 15 is a diagram of hardware that can be used to implement an embodiment of the invention;

FIG. 16 is a diagram of a chip set that can be used to implement an embodiment of the invention; and

FIG. 17 is a diagram of a mobile terminal that can be used to implement an embodiment of the invention.

DESCRIPTION OF SOME EMBODIMENTS

Examples of a method, apparatus, and computer program for providing lane-level direction-of-travel (DoT) information from overhead imagery data are disclosed, according to various example embodiments. In the following description, for the purposes of explanation, numerous specific details are set forth in order to provide a thorough understanding of the embodiments of the invention. It is apparent, however, to one skilled in the art that the embodiments of the invention may be practiced without these specific details or with an equivalent arrangement. In other instances, well-known structures and devices are shown in block diagram form in order to avoid unnecessarily obscuring the embodiments of the invention.

Reference in this specification to "one embodiment" or "an embodiment" means that a particular feature, structure, or characteristic described in connection with the embodiment is included in at least one embodiment of the present disclosure. The appearance of the phrase "in one embodiment" in various places in the specification are not necessarily all referring to the same embodiment, nor are separate or alternative embodiments mutually exclusive of other embodiments. In addition, the embodiments described herein are provided by example, and as such, "one embodiment" can also be used synonymously as "one example embodiment." Further, the terms "a" and "an" herein do not denote a limitation of quantity, but rather denote the presence of at least one of the referenced items. Moreover, various features are described which may be exhibited by some embodiments and not by others. Similarly, various requirements are described which may be requirements for some embodiments but not for other embodiments.

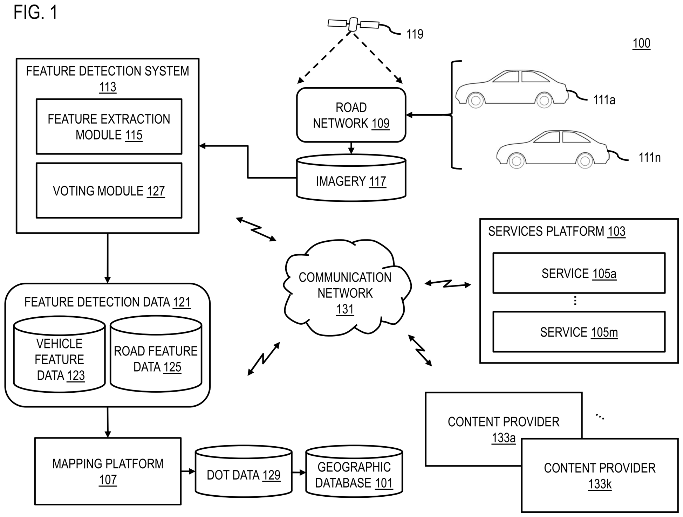

FIG. 1 is a diagram of a system capable of providing lane-level direction-of-travel (DoT) detection from overhead imagery, according to one example embodiment. Digital maps (e.g., digital map data of a geographic database 101) with lane-level details are the foundation of many applications (e.g., applications provided by a services platform 103, one or more services 105a-105m - also collectively referred to as services 105 - of the services platform 103, and/or the like). However, creating and maintaining digital maps, especially maps with lane-level details, are labor-intensive and expensive. For example, in traditional map making methods, the DoT information for road pathway lanes is either manually produced at map making time, or they are inferred by online map-making technologies from expensive autonomous vehicle perception sensor packages.

For manually created DoT data, it is hard to keep such map attributes updated with respect to road network changes or pathway planning changes due to the long production cycle associated with manual updates. For HD (High Definition) maps created from autonomous vehicles and/or advanced driver assistance systems (ADAS), such map data are created in real-time with expensive surrounding sensors. Historically, they have only limited local map coverage and are unlikely to be retained for future usage or for sharing across mapping platforms.

In addition, navigation maps (e.g., including DoT information) provide essential information for ADAS and autonomous vehicles. As vehicles become more automated, they require a better understanding of the road that most vehicle sensors cannot achieve. Lane level map features (e.g., lane level DoT information) help the vehicle find and stay in the correct lane and provide the driver with detailed lane-level visual and automated guidance. This is achieved by combining DoT information with precise lane topology, geometry, and attributes, such as lane markings, regulatory signs, etc.

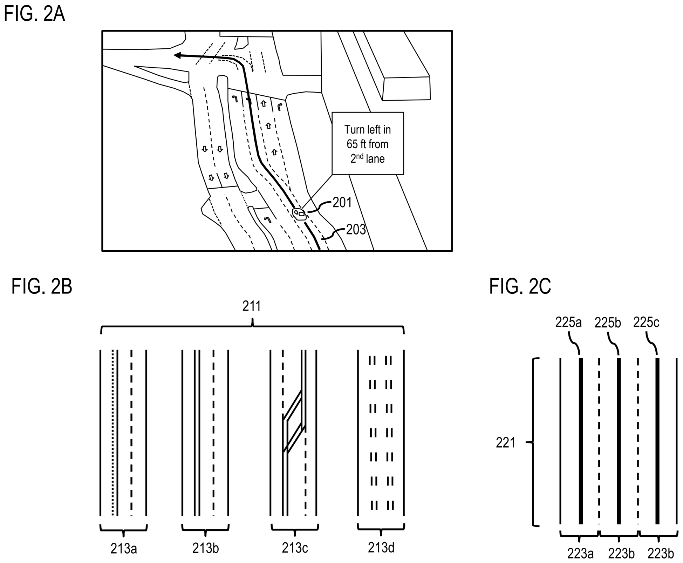

FIG. 2A is a diagram of an example of lane-level navigation, according to one example embodiment. The example of FIG. 2A illustrates the following scenario. A vehicle 201 wants to navigate through a complex multi-lane road network. The driver starts on lane 2 (e.g., lane 203) of a road segment, which goes from three lanes to four lanes with different DoT attributes: lanes 1 and 2 allow left turn only, lane 3 allows straight, and lane 4 allows right turn only. The vehicle 201 needs to follow lane 2 and make a left turn onto another road segment. In this scenario, a navigation system that can provide lane-level guidance based on lane-level DoT information can help the driver avoid confusion and missed turns. The navigation system can display the correct lane and direction icons on the map and give verbal instructions such as "Turn let in 65 ft from 2nd lane". The navigation system can also warn the driver of the vehicle 201 if the driver is on the wrong lane or needs to change lanes before an upcoming turn. Without lane-level DoT information, the navigation system may not be able to provide accurate and timely guidance, especially in situations where different lanes have different permitted turns or directions of travel.

In addition, identifying their direction of travel (DoT) is also challenging in the presence of complex road topologies (e.g., split, merge, terminations, etc.) and regulatory rules (e.g., one-way, center turning lane, etc.). This becomes even more difficult for map making use cases, since none of the directional indications nor regulatory rules are directly associated to geometrical map features in an observable manner. In other words, complex road topologies such as splits, merges, terminations, and intersections may create ambiguous or conflicting DoT information for different lanes, especially when there are multiple possible turns or directions from a single lane. Moreover, regulatory rules such as one-way streets, center turning lanes, bus lanes, bike lanes, and others may impose additional constraints or variations on the DoT of different lanes, which may not be easily observable or inferred from the geometry or topology of the road network alone. Therefore, detecting DoT for diverse types of lane topologies requires a comprehensive and robust approach that can leverage various sources of information and features, such as vehicles, road markings, signs, and other road furniture, to infer and validate the DoT of each lane in a given road segment.

FIG. 2B is a diagram of example diverse types of lane topologies for DoT detection, according to one example embodiment. For example, lane topology 213a illustrates a three-lane road where one lane that is bounded by a double lines where one line is dashed to indicate passing or lane changes are allowed from the lane but not to the lane. Lane topology 213b illustrates a three-lane road where one lane is bounded by double lines to indicate that no passing or lane changes are permitted to or from the lane. Lane topology 213c illustrates a three-lane road where the number of roads directed to one DoT changes from two lanes in the forward direction and one lane in the backward direction to one lane in the forward direction and two lanes in the backward directions. Lane topology 213d illustrates a three-lane road where each lane is separated by double dashed lines indication that passing or lane changes are permissible with caution. Each of these topologies can make it difficult to detect the proper DoT for each lane.

Accordingly, mapping and navigation service providers (e.g., operators of a mapping platform 107) face significant technical challenges with respect to acquiring, maintaining, and updating DoT information for a given road network 109.

To address these technical challenges, the system 100 of FIG. 1 introduces a capability to provide a new map creation process that automates lane level DoT attribution determination utilizing extracted road furniture and road marking features, like on-road vehicles 111a-111n (also collectively referred to as vehicles 111), directional road marking signs (e.g., heading arrow, bicycle/bus signs, etc.), as well as regulatory road marking lines (e.g., stoplines, crosswalks, yield indications, etc.). In an exemplary embodiment, the system 100 includes a feature detection system 113 comprising a feature extraction module 115 for detecting such vehicles 111, road furniture, and road marking features from aerial/satellite imagery data 117. In one embodiment, the imagery 117 is captured by a camera positioned overhead such as on a satellite 119 or other equivalent aerial platform. In one embodiment, the feature extraction module 115 can be used to extract features (e.g., feature detection data 121) from overhead imagery 117 that are relevant for determining or indicating the DoT of a road lane of the road network 109 depicted in the imagery 117. By way of example, the feature extraction module 115 can employ various computer vision and machine learning techniques (e.g., neural network) to identify and classify different types of features, such as vehicles (e.g., vehicle feature data 123) and other road feature data 125 (e.g.,

road markings, signs, traffic lights, other road furniture, and/or the like). As used herein in the context of machine learning, a network refers to an interconnected system of nodes or units arranged in layers, which collectively perform computational tasks such as object detection, classification, regression, or decision-making. These networks, often called neural networks, are inspired by the structure and function of biological neurons in the human brain. Each node in a neural network receives input signals, processes them through an activation function, and produces an output signal, which serves as input to other nodes in subsequent layers. By adjusting the weights and biases associated with connections between nodes during a training process, neural networks can learn to approximate complex functions and make predictions or decisions based on input data. Depending on their architecture and connectivity patterns, neural networks can take various forms, including feedforward networks, convolutional neural networks (CNNs), recurrent neural networks (RNNs), and more, each suited to different types of tasks and data.

The feature extraction module 115 can also determine the spatial location, orientation, and shape of the extracted features, as well as their semantic meaning and associations with other features. The extracted features can provide different sources of information for inferring the DoT of a road lane. For example, vehicles 111 on the road can indicate the DoT of the lane they are occupying or the adjacent lanes, based on their direction indications (e.g., headlights, taillights, turn signals) or their relative position to other vehicles or road markings. Road markings, such as arrows, symbols, lines, or words, can also explicitly or implicitly indicate the DoT of a lane or a group of lanes, based on their shape, color, size, or location. Signs, traffic lights, and other road furniture can also provide indications for the DoT of a lane, based on their semantic meaning, orientation, or placement on the road network 109.

In one embodiment, the feature detection system 113 can use various methods to combine the information from different detected features and infer the DoT of a road lane. For example, the feature detection system 113 can use a voting mechanism (e.g., via a voting module 127) to aggregate the DoT information from individual features or feature types and determine a consensus DoT based, e.g., on a weighted majority or equivalent voting mechanism. Alternatively, in one embodiment, the feature detection system 113 can use a deep neural network to learn a mapping function from the features to the DoT and perform inference a machine learning architecture such as but not limited to feed-forward or recurrent architectures.

In one embodiment, the feature detection system 113 can implement different feature types for determining a DoT of a road lane by using various methods to combine the information from different detected features and infer the DoT of a road lane. For example, the different feature types that can be used for DoT inference include but are not limited to:

*Direction indications of lane associated vehicles and road marking signs:* These features can provide explicit or implicit cues for the DoT of a lane or a group of lanes, based on their orientation, shape, color, or semantic meaning.

*Geospatial patterns (relative location) of lane associated regulatory markings:* These features can provide implicit cues for the DoT of a lane or a group of lanes, based on their spatial location, shape, size, or association with other markings. For example, stoplines, crosswalks, yield indications, or other regulatory markings can indicate the DoT of the lane they are associated with or the crossing lanes.

*Bag-of-Features that includes a mixture of the above feature types:* These features can provide a comprehensive and robust representation of the DoT of a lane or a group of lanes, based on the combination of different feature types. For example, a bag-of-features can include vehicles, road markings, signs, traffic lights, and other road furniture that are relevant for DoT inference. The bag-of-features can be weighted or ranked according to their importance or reliability for DoT inference.

In summary, the various embodiments described herein implement at least one or more of the following: (1) DoT inference from direction indications of lane associated vehicles and road marking signs; (2) DoT inference from geospatial patterns (relative location) of lane associated regulatory markings; and/or (3) DoT inference from Bag-of-Features that includes a mixture of the above (1) and (2) DoT indicators. In one embodiment, the feature detection system 113 can use a voting mechanism (e.g., weighted majority voting) to determine a consensus DoT from DoT information determined from individual features or feature types (e.g., corresponding to the three different inference examples listed above).

The various embodiments then can enhance high-definition map-based navigation and autonomous driving with reliable and up to date lane-level DoT information (e.g., DoT data 129). In one embodiment, the DoT data 129 can be used to update the geographic database 101 which can then be provided over a communication network 131 to the services platform 103, services 105, and/or content providers 133a-133k (also collectively referred to as content providers 133).

In one embodiment, the system 100 can associate road pathway features (e.g., extracted from overhead imagery 117) to lanes with and without road surface information for determining the lanes' DoT information. By way of example, lanes on the road network can be detected using different feature engineering and/or AI (Artificial Intelligence) machine learning technologies. Lanes can be modeled in many ways with lane boundary marking features, lane centerline feature, lane surface feature, either in a segment-by-segment manner or in a connected manner.

For simplicity but without loss of generality, the various embodiments described herein use a lane centerline feature to describe lanes on the road network. However, it is contemplated that any other equivalent type of lane representation can be used according to the various embodiments. For example, a lane centerline is a line-string feature representation comprising a list of two-dimensional (2D) (x, y) coordinates either in (longitude, latitude) or in any other coordinate systems. Additionally, three-dimensional (3D) coordinates can be used where the 2D data are appended with altitude values.

FIG. 2C is a diagram of an example lane centerline representation for lanes of a road network, according to one example embodiment. In the example of FIG. 2C, a road 221 comprises three lanes 223a-223c. Each of lane centerlines 225a-225c of the lanes 223a-223c is represented as a bold line across the road section. By way of example, the lane centerlines 225a-225c are a geometric feature that represents the center of each of the lanes 223a-223c. The lane centerlines 225a-225c can be derived from various sources, such as satellite imagery, aerial photography, road sensors, digital map data, and/or the like.

In one example embodiment, each lane centerline 225a-225c has the following representative JSON type data structure:

```
{
"geometry": {"coordinates":[[-122.0631981691,37.3891656813,-4.2199999988],[-
122.063248069,37.3891830791,-4.2399999993],...], "type": "LineString"},
"properties": {"id": "some id string", "type": "Lane Centerline", "DoT": "Unknown "}
}
```

As previously stated, it is noted that the lane representation described above is provided by way of illustration and not as limitations.

In one embodiment, the system 100 provides for at least the following lane-level identification processes: (1) accurately determining DoT attribute for lanes utilizing observable on-road features, especially those extracted from aerial/satellite imagery data; (2) providing automated DoT attribute update and verification with continuously updated aerial/satellite imagery data; and (3) providing reliable DoT attributes from pool of observable road furniture and road marking features with flexible inference logic based on their availability.

The various embodiments described herein provide for several technical advantages including but not limited to: (1) providing a systematic method that enables automation in generating critical pathway attributes; (2) can flexibly utilize bag-of-features that are available for a road pathway to generate lane level attribute; and (3) can potentially reduce DoT attribute detection and rendering time from a couple of hours to several minutes for tile-based geospatial region (e.g., at tile level 14).

In one embodiment, the various embodiments of system 100 can be deployed and scaled freely to cover all the geospatial regions that have overhead feature extraction coverage from aerial/satellite imagery data without human intervention.

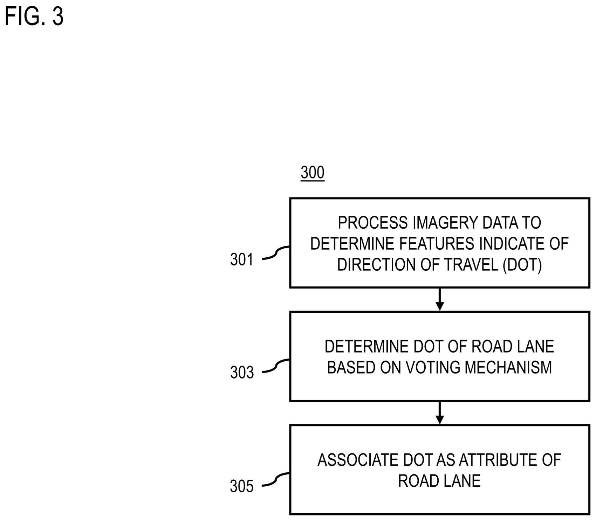

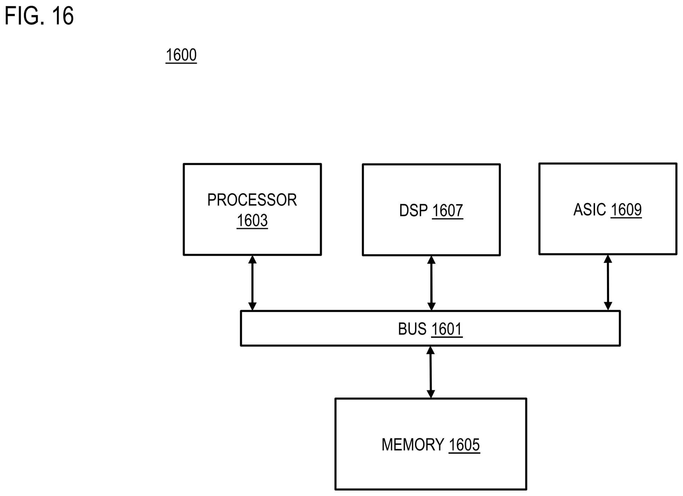

FIG. 3 is a flowchart of a process for providing DoT detection from overhead imagery, according to one example embodiment. In various embodiments, the feature detection system 113, its components (e.g., the feature extraction module 115 and voting module 127), and/or mapping platform 107 may perform one or more portions of the process 300 and may be implemented in, for instance, a chip set including a processor and a memory as shown in FIG. 16 or in circuitry, hardware, firmware, software, or in any combination thereof. As such, feature detection system 113, its components, and/or mapping platform 107 can provide means for accomplishing various parts of the process 300, as well as means for accomplishing embodiments of other processes described herein in conjunction with other components of the system 100. Although the process 300 is illustrated and described as a sequence of steps, it is contemplated that various embodiments of the process 300 may be performed in any order or combination and need not include all of the illustrated steps.

DoT for lanes is a usage attribute and traditionally cannot be determined from the lane itself. Such usage attributes can only be inferred indirectly from the direction indication of its users, such as but not limited to vehicles 111. Furthermore, DoT can be inferred from other assisting directional signals that are associated to an individual lane, like directional marking, bicycle and bus signs on the lane, the relative location of stopline or yield markings with respect to the lane geometry.

In one embodiment, the process 300 introduces DoT recognition methods and their integrated arbitration method (e.g., via a voting mechanism). Without loss of generality, lanes are defined, for instance, as drivable paths between road connection nodes (e.g., crossings, terminations, split points, merging points, etc.). In one embodiment, lanes are represented by a LineString feature, e.g., a sequence of (x, y) coordinates, where their DoT attributes take binary values of either Forward or Backward with respect to the sequential direction of their coordinates forming the LineString feature.

In step 301, the feature detection system 113 processes overhead imagery data 117 of a road network 109 to determine a plurality of features indicative of a direction of travel of at least one road lane of the road network (e.g., feature detection data 121), wherein each feature of the plurality of features indicates a candidate direction of travel (e.g., DoT data 129). For example, the feature detection system 113 can use computer vision techniques to detect vehicles 111, road markings, traffic signs, and other objects on the road network 109. Each detected feature has a feature type and a candidate direction of travel, which are inferred from the appearance, shape, orientation, and location of the feature. The feature detection system 113 can also use the geographic database 101 (or equivalent geographic information system (GIS) data) to obtain additional information about the road network 109, such as the number of lanes, the lane width, the curvature, and the connectivity of the road segments. The feature detection system 113 can use the digital map data of the geographic database 101 to associate each detected feature with a corresponding road lane or segment, and to filter out irrelevant or noisy features that do not belong to the road network 109.

Examples of computer vision techniques for detecting vehicles 111, road markings, traffic signs, and/or other objects in imagery of a road network 109 include but are not limited to:

*Object detection:* This technique aims to locate and identify multiple objects of different classes in an image. Object detection algorithms typically use a convolutional neural network (CNN) to extract features from the image and then apply a region proposal network (RPN) to generate candidate regions of interest (ROIs) that may contain objects. The ROIs are then classified and refined by another CNN to produce the final bounding boxes and class labels for each object. Some examples of object detection algorithms are Faster R-CNN, YOLO, and SSD.

*Semantic segmentation:* This technique aims to assign a class label to each pixel in an image, resulting in a dense and pixel-level classification of the image. Semantic segmentation algorithms also use a CNN to extract features from the image, but instead of generating ROIs, they use a decoder network to upsample the feature maps and produce a high-resolution output map that has the same size as the input image. The output map contains the class label for each pixel, which can be used to segment the image into different regions corresponding to different objects or categories. Some examples of semantic segmentation algorithms are FCN, U-Net, and DeepLab.

*Instance segmentation:* This technique aims to combine the tasks of object detection and semantic segmentation, by producing both bounding boxes and pixel-level masks for each object instance in an image. Instance segmentation algorithms usually follow a similar pipeline as object detection algorithms, but they also output a mask for each ROI, which is either generated by another CNN or refined from the output map of the semantic segmentation network. Some examples of instance segmentation algorithms are Mask R-CNN, PANet, and SOLO.

*Edge detection:* This technique aims to identify the boundaries of objects or regions in an image, by finding pixels that have high gradients or changes in intensity or color. Edge detection algorithms typically use a filter or a kernel to convolve with the image and produce an edge map, which is then thresholded or refined to obtain the final edges. Some examples of edge detection algorithms are Canny, Sobel, and Laplacian.

One example but not exclusive data structure that can represent detected features indicative of a DoT of road lane is a directed graph, where the nodes are the detected features and the edges are the candidate directions of travel. Each node has an attribute that stores the feature type, such as vehicle, lane marking, or sign, and each edge has a weight that reflects the confidence of the candidate direction of travel based on the feature type. For example, a vehicle feature type may have a higher weight than a lane marking feature type, because vehicles are more likely to indicate the actual direction of travel. The directed graph can be constructed by detecting the features from the overhead imagery and estimating their candidate directions of travel based on their spatial relationships and the topology of the road lane. The direction of travel of the road lane can then be determined by applying a weighted voting mechanism on the edges of the directed graph.

In step 303, the feature detection system 113 determines the direction of travel of the at least one road lane based on a weighted voting mechanism applied based on the candidate direction of travel of each feature, wherein the weighted voting mechanism weighs the candidate direction of travel of each feature based on a feature type of each feature. In one embodiment, the weighted voting mechanism is a process to combine the candidate DoTs of different features based on their feature types and their confidence levels. The feature type indicates the category or class of the feature, such as vehicle, lane marking, or sign, and the confidence level reflects how likely the feature is to indicate the direction of travel of the road lane or how confidently the feature is detected in the imagery (e.g., classification confidence output from a computer vision object detection model). The weighted voting mechanism assigns a weight to each feature type, which represents its relative importance or reliability for determining the direction of travel. For example, a vehicle feature type may have a higher weight than a lane marking feature type, because vehicles are more likely to move along the road lane and follow the traffic rules.

The weighted voting mechanism then computes the weighted sum or average of the candidate directions of travel of all features, and selects the direction of travel that has the highest weighted sum or average as the final direction of travel of the road lane. The weighted voting mechanism can also use other aggregation functions, such as median or mode, to combine the candidate directions of travel of different features. The weighted voting mechanism can be applied to the entire road lane, or to sub-segments of the road lane, depending on the granularity of the desired output. The weighted voting mechanism can also handle situations where there are conflicting or ambiguous candidate directions of travel, such as when the road lane has a bifurcation or a merge point, or when the features have noisy or incomplete data. In such cases, the weighted voting mechanism can use a threshold or a margin of error to select the direction of travel that has the most clear or consistent evidence from the features, or to report that the direction of travel is uncertain or undetermined.

In one embodiment, the feature type includes a vehicle feature type, and wherein the vehicle feature type infers the candidate direction of travel based on one or more vehicles detected in the overhead imagery. For example, the vehicle feature type uses the position and/or orientation of vehicles in the overhead imagery to infer the DoT of the road lane. The vehicle feature type assumes that most vehicles are moving along the road lane and obeying the traffic rules, such as driving on the right or left side of the road, depending on the country. Based on these factors, the vehicle feature type determines the candidate direction of travel of each vehicle, and then aggregates them into a single candidate direction of travel for the road lane. The vehicle feature type can also handle different types of vehicles, such as cars, trucks, buses, motorcycles, or bicycles, and assign different weights or confidence levels to them, depending on their size, shape, and visibility in the imagery, and/or type of road lane (e.g., car/truck paths, pedestrian paths, bicycle paths, mixed use paths, etc.).

In one embodiment, the process 300 uses detected on-road vehicles with heading direction as the driving direction indicators for DoT attribute inference. When driving on the road, the vehicle's heading direction generally aligns with the DoT of a lane that the vehicles are keeping. When parking next to a road path, most vehicles are at an angle less than 90 degrees with respect to the designated DoT of their closest pathway lanes. As a result, the DoT attribute can be inferred from all the vehicles that are associated (stay on or stay next) to a lane. In other words, the candidate direction of travel is determined based spatial relationship data between the one or more vehicles detected in the overhead imagery and a topology of the at least one road lane.

By way of example, vehicle detection and vehicle heading angle regression can be performed as follows. The feature detection system 113 can leverage the rich information provided by key geometric points of detected objects (e.g., vehicles) to infer their poses. The feature detection system 113 can integrate a dense feature extraction network and a "colored" point set regression network. As used herein, a "colored" point set for object detection refers to a collection of points, each associated with attributes denoting specific geometric parts-such as the front, rear, right, or left part-of the corresponding object (e.g., vehicle) they represent. These attributes, for example, can be visually represented by assigning different colors to points associated with distinct geometric parts of the object. By analyzing the spatial distribution of this colored point set, the orientation (e.g., heading) of the corresponding object, such as a vehicle, can be profiled or inferred. This inference is possible because the physical arrangement of the geometric parts of the object is either explicitly known or encoded during the training of the feature detection system 113 and/or its machine learning models. In some embodiments, the feature detection system 113 can learn to associate specific spatial configurations of colored points with particular object orientations, enabling accurate and direct inference of object poses or headings from the detected colored point set.

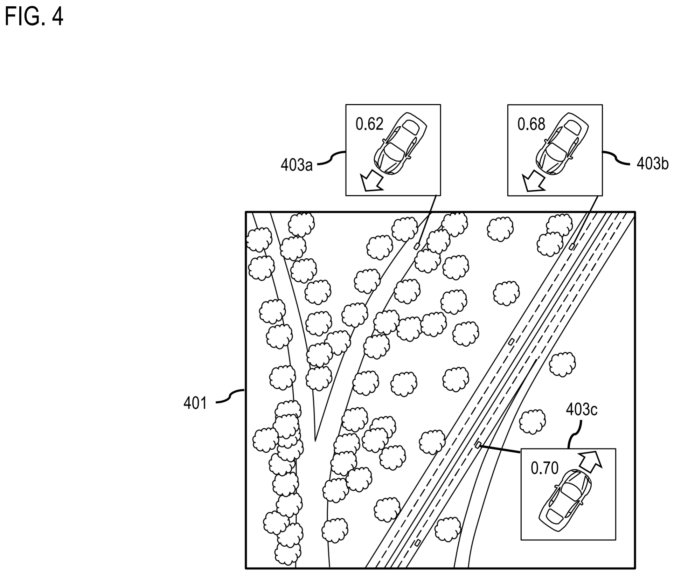

FIG. 4 is a diagram of an example vehicle detection and heading angle regression, according to one example embodiment. In the example of FIG. 4, an overhead image 401 of a road network is processed by the feature detection system 113 to detect three vehicles 403a-403c. Each detected vehicle 403a-403c is shown in a respective call out box. In each box, the heading of each vehicle 403a-403c is indicated by the direction of a corresponding arrow, and the confidence of the heading angle determination is indicated with a numerical value between 0.00 (lowest confidence) to 1.00 (highest confidence). In this example, vehicle 403a has a heading angle detection confidence of 0.62, vehicle 403b has a heading angle detection confidence of 0.68, and vehicle 403c has a heading angle detection confidence of 0.70.

In one embodiment, the association of a vehicle to individual lane is achieved by computing the spatial relationship between the vehicle and the lane's topological shape (e.g., via a point-based map matcher or equivalent). A collection of in-lane-vehicles comprises all the vehicles that have their feature shape inside the lane surface (polygon). A collection of neighboring-vehicles consists of all the vehicles that intersect with the lane surface over a threshold portion of their body shape area or are next to the lane while they are not on any road surface area.

To associate detected vehicles to lanes, the geometrical shape (polygon) of the lane surface can be obtained by partitioning road surface into lanes with respect to lane separating marking lines. In this case, both road surface and lane separating marking lines (dotted lane boundary, solid lane boundary, etc.) are road pathway features provided from feature extractions. For example, in one embodiment, the geometrical shape (polygon) of the lane surface can be obtained by partitioning the road surface into lanes with respect to lane separating marking lines as follows. First, the feature detection system 113 identifies the road surface area from the overhead imagery, which can be done by applying image segmentation techniques or using existing road pathway features. Second, the feature detection system 113 detects the lane separating marking lines within the road surface area, which can be done by applying edge detection, line detection, or pattern recognition techniques or using existing lane marking features. Third, the feature detection system 113 divides the road surface area into non-overlapping polygons corresponding to individual lanes, based on the location and orientation of the lane separating marking lines. This can be done by applying polygon clipping, polygon intersection, or polygon partitioning algorithms.

When lane separating marking lines are not available or otherwise not detected in the overhead imagery, the lane surface can be partitioned with respect to lane centerlines based on predetermined reference lane width values. In another case of when the road surface data is not available, the lane level vehicle association can be carried out solely based on a perpendicular distance from the detected vehicles to corresponding lane centerline features. First, each of the detected vehicles is associated to its closest lane by taking the shortest distance among all lanes. Next, for each lane, all its associated vehicles can be further grouped into in-lane-vehicles, neighboring-vehicles, and unrelated vehicles by comparing their distance to lane centerline with several distance threshold values. Optionally, as in this case in which the lane level vehicle association does not use surface overlap information but use point to linear segment distance, point based features association method can also apply.

When carrying out vehicle-to-lane association, relative lane geometry can also be used to improve accuracy. For example, lanes in the middle section of a lane group shall only have in-lane vehicles except at the end segments of the lane. Lanes that are next to road boundaries can have a larger set of neighboring vehicles to take advantage of directional indications from vehicles parking next to the road section.

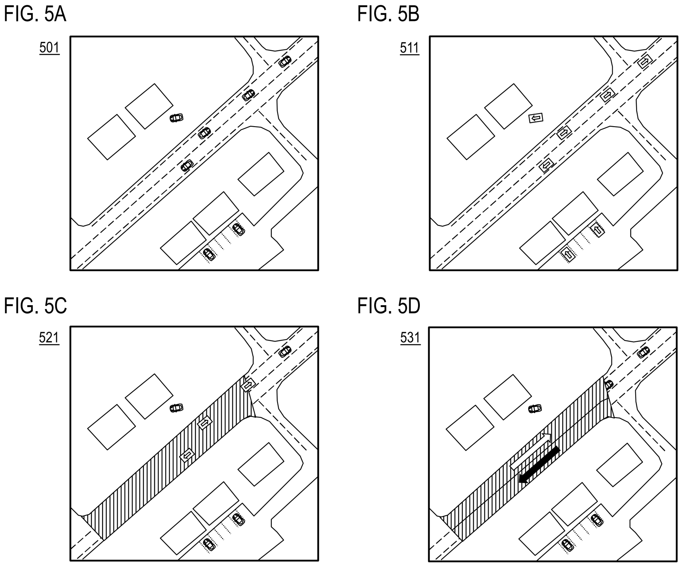

FIGs. 5A-5D are diagrams illustrating an example of DoT detection based on vehicles, according to one example embodiment. FIG. 5A illustrates an example image 501 depicting vehicles traveling on and neighboring a road segment. FIG. 5B illustrates an example image 511 that represents image 501 of FIG. 5A after it has been processed using object detection to detect vehicles in the image. Image 511 highlights the detected vehicle with respect bounding boxes and an arrow indicating the respective detected vehicle heading of each detected vehicle. FIG. 5C illustrates an example image 521 that highlights the detected road surface of the road segment as a shaded area superimposed on the image 521. FIG. 5D illustrates an example image 531 that indicates the two lanes of the detected road surface along with arrows indicating the detected DoT attributes of the two lanes. In this example, the detected DoT attributes are inferred from the associated vehicles according to the various embodiments described herein.

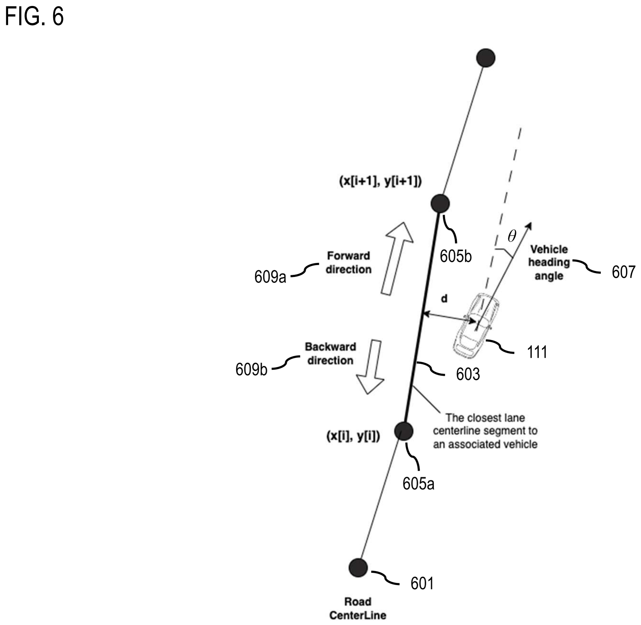

In one embodiment, the DoT attributes are detected or inferred from the associated vehicles based on a voting mechanism (e.g., a weighted majority vote process). As demonstrated in FIGs. 5A-5D, vehicles are detected in road sections from an aerial/satellite imagery data. A subset of the vehicles that are inside the lane surface areas are added to in-lane-vehicles as $V_{inside}$, whereas other vehicles that are intersecting with the lane surfaces areas (e.g., with respect to their vehicle headings) are added to neighboring-vehicles as $V_{neighbor}$. Each vehicle in each of the in-lane vehicles group and the neighboring vehicles group are evaluated to determine respective candidate DoTs from each vehicle according to the process of FIG. 6.

FIG. 6 is a diagram of DoT voting from a single oriented vehicle (e.g., in-lane or neighboring), according to one example embodiment. In one embodiment, the DoT of each vehicle is a candidate DoT that represents a vote by the vehicle for the overall DoT of a given lane. As shown, FIG. 6 illustrates a vehicle 111's orientation and position relative to a road centerline 601, with a segment 603 (e.g., represented by a thick black line) defined by a first point 605a at $((x[i], y[i]))$ and a second point 605b at $((x[i+1], y[i+1]))$, being the closest to the vehicle 111. The vehicle 111 is positioned near this centerline segment 603, with its heading angle 607 indicated by a line extending from the front of the vehicle 111. The heading angle 607 forms an angle $\theta$ with the forward direction of the centerline 601. A first arrow 609a labeled "Forward direction" and a second arrow 609b labeled "Backward direction" indicate the possible DoT along the centerline segment 603, with the forward direction 609a pointing towards $((x[i+1], y[i+1]))$ and the backward direction 609b pointing towards $((x[i], y[i]))$. Additionally, the perpendicular distance $d$ from the vehicle 111 to the centerline segment 603 is shown. This figure effectively visualizes the relationship between the vehicle 111's heading angle 607 and its position relative to the road centerline segment 603, which is used for determining the vehicle's DoT (e.g., its candidate DoT used as its vote).

In this way, each of the oriented vehicles 111 belonging to in-lane vehicles or neighboring-vehicles have the right to vote on the DoT attribute of their associated road pathway lane feature.

In one embodiment, the feature detection system 113 finds the closest linear segment 603, e.g., $(x[i], y[i])$ to $(x[i+1], y[i+1])$, from the lane centerline feature 601 to the oriented vehicle 111 instance. The feature detection system 113 computes the forward-angle and backward-angle of the linear segment based on its coordinates. Optionally, the feature detection system 113 computes the distance from the vehicle 111's reference point (e.g., center) to the linear segment 603. The feature detection system 113 computes the angular difference $\delta_f$ between vehicle 111's heading angle 607 and the forward direction angle 609a, as well as the angular difference $\delta_r$ between the vehicle 111's heading angle 607 and the backward direction angle 609b. If $\delta_f$ is less than the voting threshold, then vote by the corresponding vehicle 111 is for the forward direction 609a as the overall DoT. If $\delta_r$ is less than the voting threshold, then the vote by the corresponding vehicle 111 is for the backward direction 609b. The overall DoT for the given segment is tallied from the individual votes of the detected vehicles 111 as follows:

$$DoT = \sum_{\{i=1\}}^{n} vote * vehicle\_confidence * weight(in-lane, neighboring)$$

Where *vehicle_confidence* is the confidence of detection of the vehicle heading angle and/or the confidence of the vehicle detection itself, and *weight (in-lane)* is the weight given to vehicles classified as in-lane vehicles, and *weight (neighboring)* is the weight given to vehicles classified as neighboring vehicles. The difference in weights between in-lane and neighboring vehicles reflect that assumption that the vehicle heading of in-lane vehicles are more likely to reflect the actual DoT because they are on the road surface versus neighboring vehicles which are near (e.g., within a threshold distance) but not on the road surface.

In summary, the one or more vehicles detected in the overhead imagery are grouped into in-lane-vehicles and neighboring-vehicles. The in-lane-vehicles comprise the one or more vehicles that have a feature shape inside a surface of the at least one road lane. The neighboring-vehicles comprise the one or more vehicles that intersect with the surface of the lane over a threshold portion or that are next to the at least one road lane without being on the surface of the at least one road lane. The candidate direction of travel is determined further based on the in-lane-vehicles and the neighboring-vehicles. By way of example, the direction of travel is determined further based on a weighted majority vote of the in-lane-vehicles and the neighboring-vehicles.

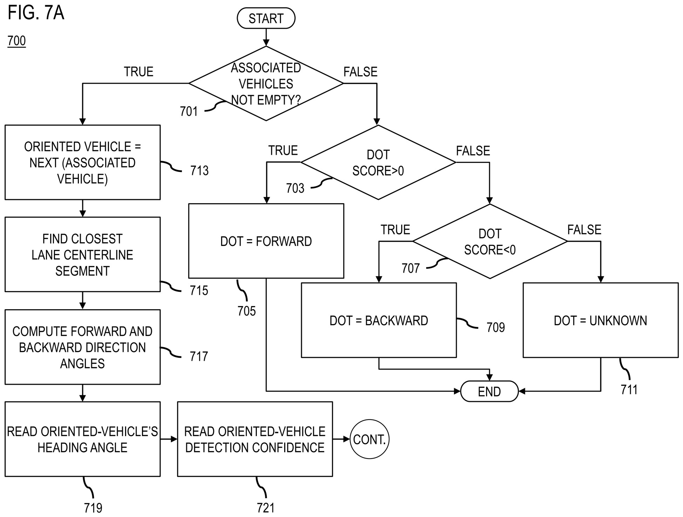

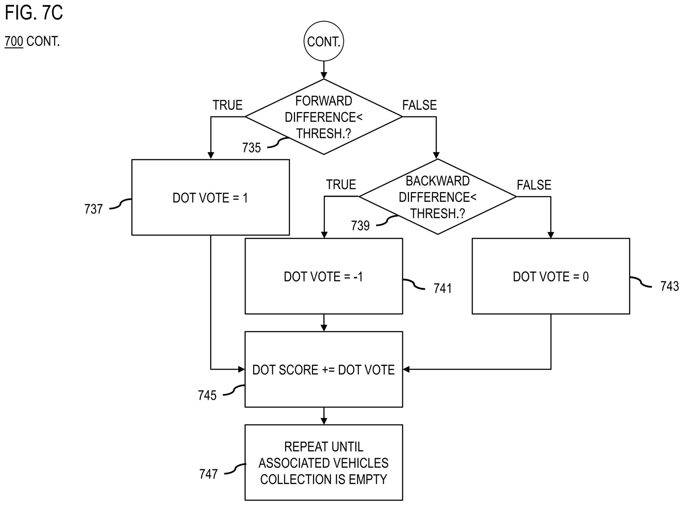

FIGs. 7A-7C are a more detailed flowchart of a process 700 for weighted majority voting for a DoT attribute based on vehicles, according to one example embodiment. The process assumes that a given overhead image has been processed to detect vehicles associated with a lane segment for which the DoT is to be determined by a voting mechanism (e.g., weighted majority voting). The feature detection system 113 compiles the detected vehicles in a list and processes each vehicle in the list one by one using the process 700. In one embodiment, the voting mechanism is based on computing a DoT score for each vehicle in the list. At the beginning of the process 700, the DoT score is initialized as "0" for each associated vehicle (e.g., detected vehicle physically closest to a given lane segment of interest).

At process 701, the feature detection system 113 begins by checking if there are more associated vehicles for a given segment to process (e.g., additional vehicles if the process 700 is iterating through a list of multiple vehicles). If there are no more associated vehicles (e.g., end of the vehicles list is reached), the feature detection system 113 tallies up the DoT score to determine the vote for a given lane segment. At process 703, if the DoT score is greater than 0, the feature detection system 113 determines that the vote is for the DoT being in the forward direction (process 705). At process 707, if the DoT score is less than 0, the feature the feature detection system 113 determines that the vote is for the DoT being in the backward direction (process 709). If the DoT score is equal to zero (e.g., neither greater than 0 or less than 0), the feature detection system 113 determines that the vote is for the DoT being unknown (process 711). The process 700 then ends and outputs the final DoT determination based on the voting.

If there are associated vehicles to process (i.e., associated vehicles is not empty), the feature detection system 113 selects the next associated vehicle in the list as the oriented vehicle to process (process 713). For each "oriented-vehicle" in "Next(associated-vehicle)", the feature detection system 113 finds the closest lane centerline segment (e.g., based on the distance d of the vehicle to the centerline segment) (process 715). The forward direction angle "alpha_f' and backward direction angle "alpha _r" are also computed (process 717). The heading angle "alpha_v" (process 719) and detection confidence "Vc" of the "oriented-vehicle" also are determined (process 721) (e.g., read from machine-learning-based heading angle regression process previously described).

The process 700 then continues from FIG. 7A to FIG. 7B. At process 723, the feature detection system 113 then determines if the "oriented-vehicle" is in the "in_lane_vehicles" group. If the vehicle is in "in_lane_vehicles", the vehicle is given a voting weight designated for in-lane vehicles (e.g., set weight = in-lane vehicle weight) (process 725). At process 727, if the "oriented-vehicle" is in the "neighboring vehicles" group, the vehicle is given a voting weight designated for neighboring vehicles (e.g., set weight = neighboring vehicle weight) (process 729). If the "oriented-vehicle" is not classified in either "in_lane_vehicles" or "neighboring vehicles", the vehicle is given no weight (e.g., set weight = 0). In other words, the weight for a given vehicle is set based on the vehicle's position relative to the road surface: if in "in_lane_vehicles", "Vw = in_lane_weight"; if in "neighboring _vehicles", "Vw = neighboring_weight"; and if not in either category, "Vw = 0.0". Next, the angular difference "delta _f" between the heading angle of the vehicle and the forward direction angle (process 731), and "delta _r" between the heading angle and the backward direction angle, are computed (process 733).

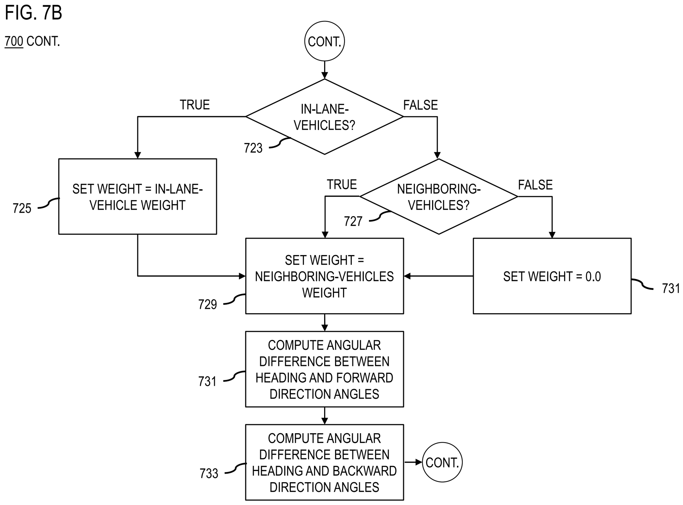

The process 700 then continues from FIG. 7B to FIG. 7C. At process 735, if "delta_f" is less than "delta_f_angle_threshold" (e.g., the forward angular difference is less than the forward angular threshold), "dot_vote" is set to 1 to indicate a vote for the forward DoT (process 737). At process 739, if "delta_r" is less than "delta_r_angle_threshold" (e.g., the backward angular difference is less than the backward angular threshold), "dot_vote" is set to -1 to indicate a vote for the backward DoT (process 741). Otherwise, "dot_vote" is set to 0 to indicate no vote for either direction (process 743). At process 745, the running tally of the 'DoT_score' is updated as "DoT _score += dot_vote * Vc * Vw" wherein the dot_vote for each oriented vehicle is added to the overall DoT_score based on the weight of vehicle (e.g., with respect to in-lane or neighboring vehicle) and the detection confidence. The process 400 then repeats until the list of associated vehicles is empty (process 747).

At the completion of the process 700, the DoT for the lane segment is determined as follows: if "DoT_score > 0", "DoT" is set to forward; if "DoT_score < 0", "DoT" is set to backward; and if "DoT _score = 0", "DoT" is set to unknown.

In one alternative embodiment, the DoT attribute inference process can implement a machine learning based classifier that carries out binary (e.g., forward vs. backward) classification from formatted input features. Such machine learning classifier can be a Decision Tree, a Random Forest classifier, a XGBoost classifier, or a Neural Network Classifier like MLP or Deep Learning networks. These classifiers are candidates from the family of supervised learning algorithms - algorithms that learn from labeled training data, where the target outcome is already known. This learning process results in a model that can make accurate predictions when presented with new, unseen data.

The supervised classifiers are trained before serving as an inference engine. To train such models, a dataset with X _train, y_train samples are curated, where X_train represents sample for model input, and Y_train represent the pre-labeled DoT attribute corresponding to each of the X_train samples. At test time, X_test can be applied, and it represents input samples that have not be seen by the classifier before. Their prediction outputs from the classifier become the inferred DoT attributes.

It is contemplated that there can be a large variety of different specifications for X_train sample construction. In one embodiment, the classifier training be according to the following or equivalent training process:

```
# Create a classifier and fit it to the training data

    clf = Classifier(meta parameters)
    clf.fit(X _train, y_train)

# Predict the labels of the test set
y_pred = clf. predict(X_test)
```

In the above formulation, the Classifier() can take any instance of the above-mentioned supervised classifiers. The classifier is defined with meta parameters to optimize performance. The design for input data X _train and X_test can be flexibly chosen with the objective to achieve the best DoT inference performance. A first exemplary design for classifier input can be a flat array comprising attributes from the pre-defined N associated object instances. For example, each object can have attribute set as: {object category(small vehicle, large vehicle, etc.), angular difference to forward lane direction, angular difference to backward lane direction, distance to lane centerline, object detection confidence}

The complete input data repeats the above object's attribute set for N times. When the number of lane-associated objects (e.g., vehicles) is less than N, the non-available object's input can take a default attribute set as: {object category(unknown), null, null, null, 0.0}.

When the number of lane-associated objects are larger than N, the top-N objects will be used based on their detection confidence values.

The classifier's input design can alternatively take different forms of statistical abstractions from the above raw data format including mean value and/or standard deviation value over the non-categorical attributes of object.

In one embodiment, the feature detection system 113 can perform DoT inference from other lane associated Directional Indication Features (DIFs). In other words, the same DoT inference algorithms for vehicles with heading direction can be applied to other on-road marking features, including but not limited to directional category marker (DCM), bicycle sign, bus sign, etc., with the following additional design logics: (1) only in-lane directional indication features are considered; and (2) various categories of DIF can be assigned with different weighting factors in DoT score computation (e.g., DCM can be assigned with a high (larger) weighting factor as its directional indication is very deterministic). Accordingly, in one embodiment, one of the available feature types (e.g., for determining DoT) includes a DIF type, and wherein the DIF type infers the candidate direction of travel based on one or more DIFs that are detected on the at least one road lane in the overhead imagery.

In one embodiment, the heading direction of different DIF are made at their feature detection level in an equivalent manner as the oriented vehicle detections discussed above. For example, the feature detection system 113 can identify the heading direction of different DIFs by analyzing their orientations and shapes in overhead imagery. By way of example, a DCM with an arrow pointing to the left or right indicates the heading direction of the corresponding lane, while a bicycle sign or a bus sign with a horizontal bar indicates the heading direction of the adjacent lane. The feature detection system 113 can use similar algorithms as the oriented vehicle detections to extract the orientation and shape information from the pixel values of the DIFs. The feature detection system 113 can also use a pre-trained classifier to recognize the category of the DIFs and assign them with appropriate weighting factors based on their reliability and specificity for DoT inference. For example, as noted, a DCM can have a higher weighting factor than a bicycle sign or a bus sign, since a DCM is more directly related to the DoT than the other signs. The feature detection system 113 can then combine the orientation, shape, category, and weighting factor information of the DIFs to infer the candidate DoT for each lane.

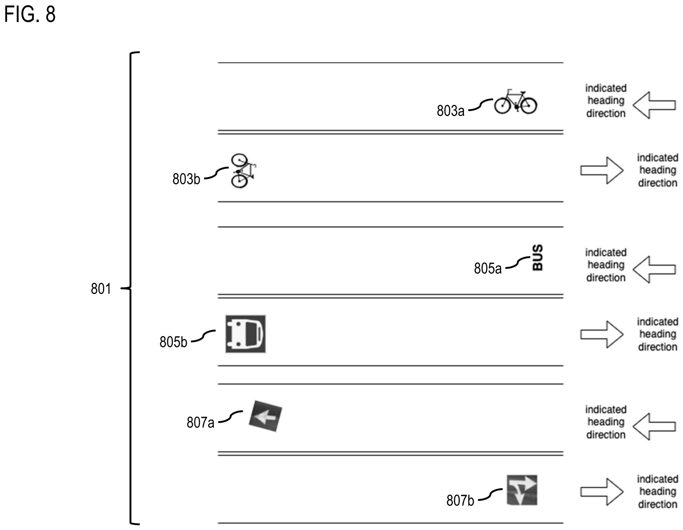

FIG. 8 is a diagram of example direction indication features (DIFs) from on-lane marking signs, according to one example embodiment. As shown, a set 801 of example DIFs can include bicycle signs 803a-803b, bus signs 805a-805b, and directional arrows 807a-807b. A direction indication feature (DIF) detected as an on-lane marking from imagery can indicate the direction of travel (DoT) of a road lane because of the orientation of the DIF relative to the road lane. For example, if a DIF is an arrow (e.g., direction arrow 807a-807b) that points left or right on a lane, it indicates that the lane allows turning in that direction. Similarly, if a DIF is a bicycle sign 803a-803b or a bus sign 805a-805b, the orientation of the sign relative to the road lane can indicate the direction from which a person on the road can read the sign. For example, if the bus sign 805a is oriented so that the top of the letters is to the west and the bottom to the east, the sign 805a can be inferred to be read going from east to west. This direction, in turn, can then be used to infer the DoT of the lane. In one embodiment, the orientation of the DIF can be measured by analyzing its pixel values and shape features in the imagery, and compared with the orientation of the lane to infer the candidate DoT. The DIF can also be categorized by its type and assigned a weighting factor based on its reliability and specificity for DoT inference. For instance, a directional category marker (DCM) can have a higher weighting factor than a bicycle sign or a bus sign, since a DCM is more directly related to the DoT than the other signs. The orientation, category, and weighting factor information of the DIFs can then be used to determine the most likely DoT for each lane using either a weighted majority voting algorithm or a machine learning based DoT classification algorithm.

In other words, these DIFs, once associated to a lane object, can be used in the same way as in-lane-vehicles in the DoT inference logic with their individual detection confidence and weights in either the weighted majority voting algorithm or the ML based DoT classification algorithm.

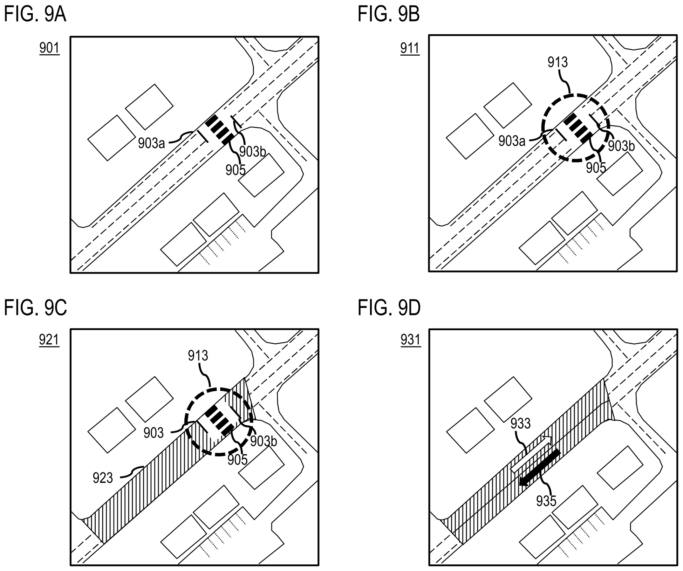

In another embodiment, one of the feature types that can be used to infer DoT includes a relative location type. This relative location type infers the candidate direction of travel based on a geospatial relationship between a lane geometry of the at least one road lane and one or more road features (e.g., DIFs). The geospatial relationship can be based on a pattern or a sequence of the one or more road features relative to the lane geometry. The one or more road features, for instance, includes road marking feature, and the road marking feature can include a stopline, a yield indication, a crosswalk, or a combination thereof. For example, there are road pathway sections where neither vehicle nor DIF of any type are presented as illustrated in image 901 of FIG. 9A. In these cases, the lane level DoT attribute can be determined from geospatial relationship between lane geometry and lane associated road marking features such as but not limited to stoplines, yield indications, crosswalks, etc.

As used herein, a stopline is a road marking that indicates where vehicles must stop at an intersection or a crossing. It is usually a solid white line perpendicular to the direction of travel, and it may be accompanied by a traffic signal or a sign. A stopline helps regulate the traffic flow and prevent collisions by defining the boundary of each road section. When a stopline is present, vehicles must stop before the line and not cross it until it is safe and legal to do so.

A yield indication on a road lane is a road marking that indicates that vehicles must give way to other traffic or pedestrians when approaching an intersection or a merging point. It is usually a broken white line forming a triangle or an inverted V shape, and it may be accompanied by a sign with the word "YIELD" or a symbol of a red triangle. A yield indication helps regulate the traffic flow and prevent collisions by defining the priority of each road section. When a yield indication is present, vehicles must slow down and be ready to stop before the line and not cross it until it is safe and legal to do so.

A crosswalk sign on a road lane is a road marking that indicates where pedestrians can safely cross the road. It is usually a series of parallel white lines that span the width of the road and are perpendicular to the direction of travel. A crosswalk sign helps regulate the traffic flow and protect pedestrians by defining the boundary of each road section. When a crosswalk sign is present, vehicles must yield to pedestrians who are crossing the road within the marked area.

FIGs. 9A-9D are diagrams illustrating an example of DoT detection based on stopline and crosswalk geospatial patterns, according to one example embodiment. The example of FIGs. 9A-9D is presented to demonstrate the inference logic based on available stopline and crosswalk features when there is no on the road section. Image 901 of FIG. 9A, for instance, shows that there are no vehicles visible. Instead, the image depicts a road segment with stoplines 903a-903b flanking a crosswalk 905. Image 911 of FIG. 9B illustrates that the stoplines 903a-903b and crosswalk 905 are detected by the feature detection system 113 as highlighted within the circle 913. Image 921 of FIG. 9C depicts the detection of the road surface 923 of the corresponding road segment with the detected stoplines 903a-903b and crosswalk 905 overlaid on the road surface 923. Image 931 of FIG. 9C depicts the DoT of the two lanes of the road surface. The first DoT 933 indicates a forward DoT based on the detected sequence of the stopline 903a occurring before the crosswalk 905 (e.g., a known sequence of the features that is compared to the detected sequence to identify the DoT). The second DoT 935 indicates a backward DoT based on the detected sequence of the stopline 903b occurring before the crosswalk 905 in the opposite direction.

In other words, for lane-associated road marking features, along the lane centerline node/coordinates' sequence, the detection of a stopline->crosswalk pattern can set the lane's DoT attribute to "forward". A detection of a crosswalk->stopline pattern can set the lane's DoT attribute to "backward". A detection of a stopline->crosswalk->stopline pattern will keep the DoT attribute in "undetermined/unknown" status. In this way, the feature detection system 113 determines a candidate direction of travel based on the pattern of features in each of the plurality of grouped features (e.g., grouping stoplines to corresponding crosswalks).

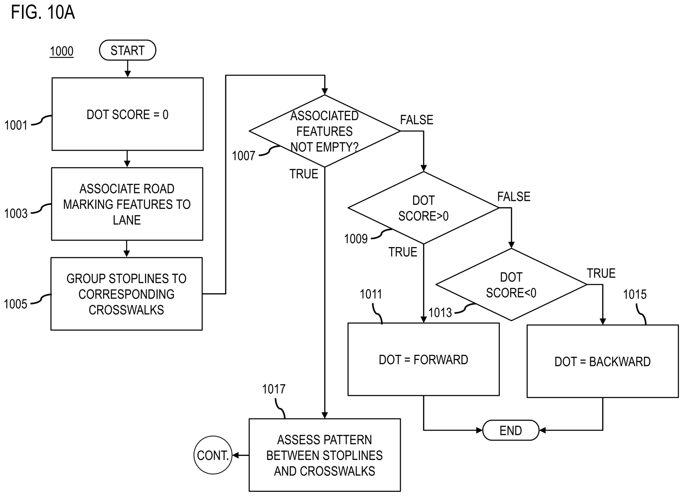

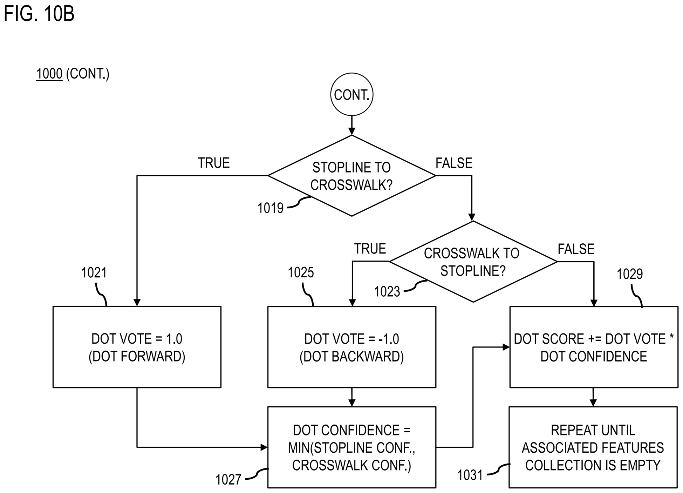

The process for determining the DoT attribute from stopline-to-crosswalk pattern described in FIGs. 9A-9B is described in more detail with respect to FIGs. 10A and 10B. FIGs. 10A and 10B are a flowchart of a process 1000 for inferring DoT from stopline and crosswalk geospatial patterns, according to one example embodiment. The process 1000 begins by initializing a DoT score for a given lane segment to 0 (process 1001). The feature detection system 113 then processes overhead imagery to detect stopline and crosswalk features associated with the given lane segment. For example, to detect stopline and crosswalk features, the feature detection system 113 applies an object detection algorithm to an overhead image to identify the potential road markings in the image. The algorithm can use a convolutional neural network (CNN) model that is trained on a large dataset of annotated images containing various road markings. The algorithm outputs a list of bounding boxes and labels for each detected road marking, such as a stopline, crosswalk, arrow, etc.

At process 1003, the feature detection system 113 associates the detect stopline and crosswalk features to respective lane segments. For example, the feature detection system 113 can use a geometric approach to associate or map each detected feature to a lane segment based on its spatial proximity and orientation. For example, the feature detection system 113 can compute the distance between each feature and the centerline of each lane segment, and select the lane segment with the minimum distance as the matching candidate. Then, the feature detection system 113 can check if the orientation of the feature is consistent with the direction of the lane segment, by comparing the angles of the stopline, the crosswalk, and the lane segment. If the angle difference is within a predefined threshold, the feature detection system 113 can confirm the association between the feature and the lane segment.

At process 1005, the feature detection system 113 groups the stopline features to corresponding crosswalk features. For each detected stopline, the feature detection system 113 can find the nearest crosswalk (or vice versa) that is parallel to the stopline and within a predefined distance threshold. If such a crosswalk exists, the feature detection system 113 groups them together as a feature group. The feature detection system 113 then generates a list of the detected feature groups associated with the given lane segment.

At process 1007, the feature detection system 113 checks if the list of associated features for the given lane segment is not empty. If there are no more associated feature groups (e.g., end of the associated features list is reached), the feature detection system 113 tallies up the DoT score to determine the vote for a given lane segment. At process 1009, if the DoT score is greater than 0, the feature detection system 113 determines that the vote is for the DoT being in the forward direction (process 1011). At process 1013, if the DoT score is less than 0, the feature the feature detection system 113 determines that the vote is for the DoT being in the backward direction (process 1015). If the DoT score is equal to zero (e.g., neither greater than 0 or less than 0), the feature detection system 113 determines that the vote is for the DoT being unknown. The process 1000 then ends and outputs the final DoT determination based on the voting.

If there are associated vehicles to process (i.e., associated grouped features list is not empty), the feature detection system 113 assesses the pattern between each stopline-to-crosswalk feature group (process 1017). To perform this assessment, for each subset of grouped stopline and crosswalk, along the sequential direction of lane centerline coordinates, the feature detection system 113 detects the geospatial relationship pattern between grouped stopline to crosswalk. At process 1019, if the pattern of the grouped features is stopline to crosswalk, the feature detection system 113 determines that the vote is for the DoT being in the forward direction and sets the DoT vote to 1.0 to indicate a vote for the forward direction (process 1021 as continued from FIG. 9A to 9B). At process 1023, if the pattern of the grouped features is crosswalk to stopline, the feature detection system 113 determines that the vote is for the DoT being in the backward direction and sets the DoT vote to 0.0 to indicate a vote for the backward direction (process 1025). In other words, the feature detection system 113 sets the DoT attribute to "forward" by detecting a stopline-to-crosswalk pattern, and sets the DoT attribute to "backward" by detecting a crosswalk-to-stopline pattern. Otherwise, the feature detection system 113 keeps the DoT attribute unchanged.

At process 1027, the feature detection system 113 can determine the DoT confidence associated with each vote (e.g., either a vote for the forward direction or the backward direction). The confidence can be based on the respective detection confidences of the stoplines and/or the crosswalks. In one embodiment, the DoT confidence can be set as the minimum of the stopline confidence and crosswalk confidence, e.g., $min$(*stopline confidence, crosswalk confidence*). It is noted that the minimum is provided by way of illustration and not as limitation. It is contemplated that any other algorithm for determining a DoT confidence from the individual stopline and crosswalk confidences can be used according to the various embodiments.

At process 1029, the running tally of the 'DoT_score' is updated as "DoT_score += dot_vote * DoT confidence" wherein the dot_vote for each oriented vehicle is added to the overall DoT_score based on the computed DoT confidence. The process 1000 then repeats until the list of associated group features is empty (process 1031).

At the completion of the process 1000, the DoT for the lane segment is determined as follows: if "DoT_score > 0", "DoT" is set to forward; if "DoT_score < 0", "DoT" is set to backward; and if "DoT_score = 0", "DoT" is set to unknown.

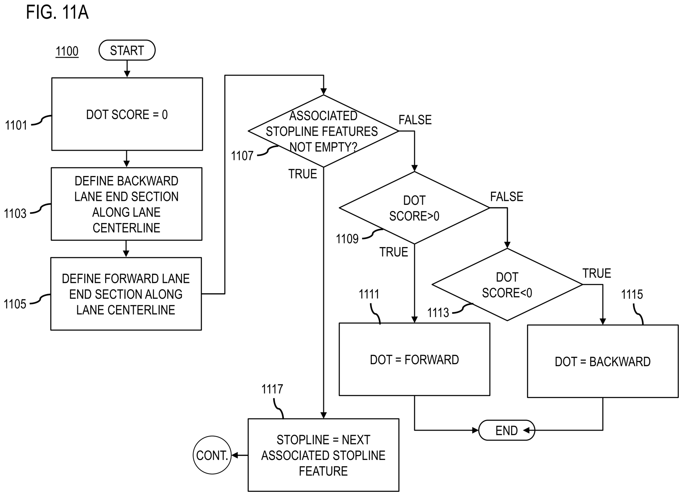

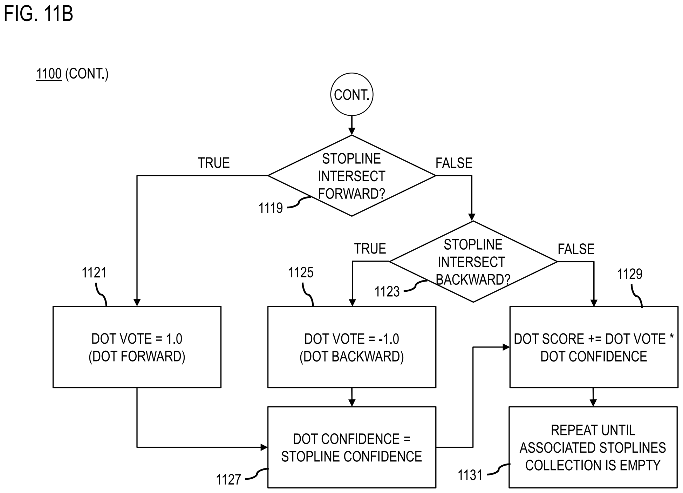

In one embodiment, when stoplines are detected but no crosswalks are detected in in-lane features, a stopline spatially located at the forward end section of the lane indicates "forward" DoT attribute whereas a stopline spatially located at the backward end section of the lane indicates "backward" DoT attribute. In one embodiment, along the sequential direction of the lane centerline, the first $n$ nodes, or alternatively $m$ meters, is defined as the "backward" end section; and the last $n$ nodes, or $m$ meters, is defined as the "forward" end section. The DoT attribute is set accordingly by checking if they contain or intersect with a stopline feature as detailed in FIGs. 11A and 11B. In other words, the feature detection system 113 can process overhead imagery data of a road network to determine a plurality of features (e.g., a stopline, yield indication, and/or equivalent), wherein the plurality of features is indicative of a direction of travel of at least one road lane of the road network based on a relative location of each feature of the plurality of features to the at least one road lane.

FIGs. 11A and 11B are a flowchart of a process for inferring DoT from stopline features, according to one example embodiment. The process 1100 begins by initializing a DoT score for a given lane segment to 0 (process 1101). The feature detection system 113 then processes overhead imagery to detect stopline features (without crosswalk feature) associated with the given lane segment. For example, to detect stopline features, the feature detection system 113 applies an object detection algorithm to an overhead image to identify the potential road markings in the image. The algorithm can use a convolutional neural network (CNN) model that is trained on a large dataset of annotated images containing various road markings. The algorithm outputs a list of bounding boxes and labels for each detected road marking, such as a stopline.

At process 1103, the feature detection system 113 defines the backward lane end section along the lane centerline. As described above, along the sequential direction of the lane centerline, the first $n$ nodes, or alternatively $m$ meters (e.g., or any other designated distance) occurring along the sequential direction, is defined as the "backward" end section. At process 1105, the feature detection system 113 defines the forward lane end section along the lane centerline. As similarly described above, the last $n$ nodes, or $m$ meters, is defined as the "forward" end section.

At process 1107, the feature detection system 113 checks if the list of associated stoplines for the given lane segment is not empty. If there are no more associated feature groups (e.g., end of the associated features list is reached), the feature detection system 113 tallies up the DoT score to determine the vote for a given lane segment. At process 1109, if the DoT score is greater than 0, the feature detection system 113 determines that the vote is for the DoT being in the forward direction (process 1111). At process 1113, if the DoT score is less than 0, the feature the feature detection system 113 determines that the vote is for the DoT being in the backward direction (process 1115). If the DoT score is equal to zero (e.g., neither greater than 0 or less than 0), the feature detection system 113 determines that the vote is for the DoT being unknown. The process 1100 then ends and outputs the final DoT determination based on the voting.

If there are associated vehicles to process (i.e., associated stopline features is not empty), the feature detection system 113 selects the next associated stopline feature in the list as the stopline to process (process 1117). At process 1119, if the stopline feature intersects with the forward end section of the lane, the feature detection system 113 determines that the vote is for the DoT being in the forward direction and sets the DoT vote to 1.0 to indicate a vote for the forward direction (process 1119 as continued from FIG. 11A to 11B). In other words, the end section of the lane being analyzed is a forward end section comprising a designated number of nodes or a designated distance occurring last in a sequential direction of the at least one road lane; and then the candidate direction of travel is a forward direction of travel based on determining that the relative location of the feature is in the forward end section. At process 1123, if the stopline feature intersects with the backward end section of the lane, the feature detection system 113 determines that the vote is for the DoT being in the backward direction and sets the DoT vote to -1.0 to indicate a vote for the backward direction (process 1125). In other words, at process 1125, the end section of the lane being analyzed is a backward end section comprising a designated number of nodes or a designated distance occurring first in a sequential direction of the at least one road lane; and then the candidate direction of travel is a backward direction of travel based on determining that the relative location of the feature is in the backward end section.

At process 1127, the feature detection system 113 can determine the DoT confidence associated with each vote (e.g., either a vote for the forward direction or the backward direction). The confidence can be based on the respective detection confidences of the corresponding stoplines. In one embodiment, the DoT confidence can be set as equal to the stopline confidence. It is noted that the minimum is provided by way of illustration and not as limitation. It is contemplated that any other algorithm for determining a DoT confidence from the individual stopline confidences can be used according to the various embodiments.

At process 1129, the running tally of the 'DoT_score' is updated as "DoT_score += dot_vote * DoT confidence" wherein the dot_vote for each oriented vehicle is added to the overall DoT_score based on the computed DoT confidence. The process 1100 then repeats until the list of associated stopline features is empty (process 1131).

At the completion of the process 1100, the DoT for the lane segment is determined as follows: if "DoT_score > 0", "DoT" is set to forward; if "DoT_score < 0", "DoT" is set to backward; and if "DoT _score = 0", "DoT" is set to unknown.

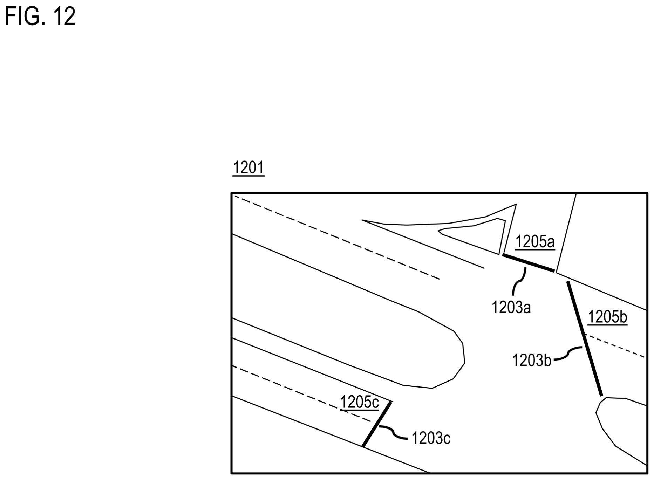

FIG. 12 is a diagram of example stoplines at the end of lane sections, according to one example embodiment. As shown, an image 1201 depicts stoplines 1203a-1203c that are located at the end sections of respective lanes 1205a-1205c. Each stopline 1203a-1203c is within distance threshold (e.g., m meters) for being within the end section of the lanes 1205a-1205c and intersect each respective lane 1205a-1205c. In one embodiment, a stopline intersects a lane if the stopline crosses a designated linear feature (e.g., centerline, boundary, etc.) of the lane at any point within the end section of the lane. For example, the stoplines 1203a-1203c are perpendicular or oblique to the lanes 1205a-1205c and would intersect the lanes that it passes through.

In one embodiment, when "yield indication" features are presented in the associated features for a lane, the same DoT inference methods for stoplines apply to yield indication features as well.

It is noted that the examples of stoplines, crosswalks, and yield indications discussed in the various embodiments herein are provided by way of illustration and not as limitations. It is contemplated that any equivalent road marking, road furniture, road signs, objects, etc. with equivalent spatial relationships to road lanes can be used according to the various embodiments described herein.

In one embodiment, the feature detection system 113 can perform DoT inference from multiple feature types (e.g., a Bag-of-Features). As used herein, a bag of features is a representation of a lane segment that consists of a set of features extracted from overhead imagery, such as vehicle features, directional indication features, grouped feature patterns, and/or the like. As previously discussed, vehicle features are the features that indicate the orientation and position of a vehicle on a lane. DIF features are the features that indicate the direction of travel for a lane, such as arrows, signs, or symbols. Grouped feature patterns are the features that indicate the spatial relationship between different road elements, such as stoplines, crosswalks, or yield indications.

The feature detection system 113 can perform direction of travel inference from a bag of features by applying different DoT determination algorithms for each feature type and then arbitrating the results based on a voting scheme. The feature detection system 113 can then aggregate the DoT attributes from all the features in the bag of features and assign a final DoT attribute for the lane based on a majority vote, a weighted vote, etc. The system can also handle conflicting or ambiguous DoT attributes by using a threshold or a confidence score to decide whether to accept or reject the DoT attribute. The system can also update the DoT attribute over time as new features are detected or old features are occluded.

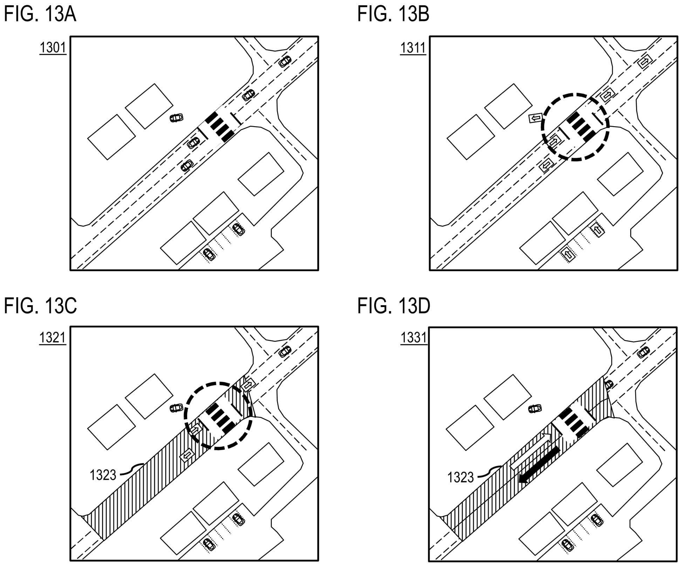

FIGs. 13A-13D are diagrams illustrating an example of DoT detection based on multiple feature types (e.g., a bag-of-features), according to one example embodiment. As shown in FIG. 13A, an overhead image 1301 depicts a road section with two lanes with various vehicles traveling on the road. The road section also has stoplines and a crosswalk. In this case, the lane level DoT attributes for this road section can be inferred from Bag-of-Features including all the individual associated features even though their categorical DoT determination algorithms are different. For example, image 1311 of FIG. 13B illustrates the results of object/feature detection with detected vehicles indicated by respective bounding boxes with arrows indicating the detected vehicle headings. The stopline and crosswalk features have also been detected. Image 1321 of FIG. 13C illustrates detected road surface 1323 that can be used for classifying in-lane and neighboring vehicles. In this specific example, for the left lane, there are two associated vehicles that vote "Forward" DoT attribute, and a stopline-to-crosswalk pattern that votes "Forward" DoT attribute. So, the final arbitrated DoT for the left lane is "Forward". For the right lane, one vehicle votes "Backward" DoT attribute and one stopline-to-crosswalk pattern votes "Backward". So, the final arbitrated DoT for the right land is "Backward". Image 1331 of FIG. 13D illustrates the "Forward" DoT attribute for the left lane and the "Backward" DoT attribute for the right lane of the detected road surface 1323.

As illustrated in FIGs. 13A-13D, in one embodiment, for each lane level associated feature, the DoT arbitration logic takes advantage of all their votes while applying different categorical weight based on their feature types. The overall arbitration logic is:

$$DoT_{arbitrated} = \sum_{\{i=1\}}^{n} V_i * C_i * W(Cat(i))$$

Where $V_i$ is the DoT vote from feature-$i$ (the $i$-th associated feature), taking the value 1 for "forward" and -1 for "backward". $C_i$ is the confidence value for the $i$-th feature, taking floating value in the range (0, 1). $Cat(i)$ indicates the category (or feature type) of feature-$i$, from the available feature pool, like vehicle, stopline, stopline-crosswalk, yield indication, DCM, etc. $W(\cdot)$ applies the categorical weight to the arbitration equation. Various categories of features usually take different weights based on their reliability rank. For example, DCM can take a much higher weight over vehicles because their direction certainly ranked higher than the detected vehicles.

This Bag-of-Features design assures DoT attribute inference reliability while retaining flexibility over available feature association to the host pathway lanes.

In step 305, the feature detection system 113 associates the determined direction of travel as an attribute of the at least one road lane in the geographic database 101. For example, the DoT attribute can be added as data field of a data record representing the corresponding road lane in the digital map data of the geographic database 101. The geographic database 101 can then be made accessible to the services platform 103, services 105, one or more content providers 133a-133k (also collectively referred to as content providers 133), and/or any other component of the system 100 or with connectivity to the system 100.

In one embodiment, one example use case for lane-level DoT attribute data includes but is not limited to controlling autonomous vehicles to enable safe and efficient lane changes and maneuvers at complex intersections. For instance, an autonomous vehicle approaching a multi-lane intersection may need to determine which lane to enter based on its intended destination and the traffic conditions. By accessing the geographic database 101 that contains the DoT attribute data for each lane at the intersection, the autonomous vehicle can select the appropriate lane that matches its desired direction of travel and avoid entering a lane that goes in the opposite direction or leads to a different route. Additionally, the autonomous vehicle can use the DoT attribute data to anticipate the behavior and intentions of other vehicles at the intersection and adjust its speed and position accordingly. For example, the autonomous vehicle can avoid colliding with another vehicle that is turning left from a lane that has a DoT attribute indicating a forward direction, or yield to a vehicle that is coming from a lane that has a higher priority DoT attribute. By utilizing the lane-level DoT attribute data, the autonomous vehicle can enhance its situational awareness and decision-making capabilities at complex intersections and improve its safety and efficiency.

Returning to FIG. 1, as shown and discussed above, the system 100 includes the feature detection system 113 and mapping platform 107 for providing lane-level DoT detection from imagery 117. In one embodiment, the feature detection system 113 and/or mapping platform 107 have connectivity or access to one or more databases for storing the feature detection data 121 and/or DoT data 129 determined according to the various embodiments described herein, and as well as a geographic database 101 for retrieving mapping data and/or related attributes for DoT detection. In one embodiment, the geographic database 101 can include electronic or digital representations of mapped geographic features mapped or determined based on the DoT data 129. In one embodiment, the feature detection system 113 and/or mapping platform 107 have connectivity over a communication network 131 to the services platform 103 that provides one or more services 105. By way of example, the services 105 may be third-party services that rely on location-based services created or developed based on the DoT data 129 generated according to the various embodiments described herein. By way of example, the services 105 include, but are not limited to, autonomous/semi-autonomous vehicle operation, mapping services, navigation services, travel planning services, notification services, social networking services, content (e.g., audio, video, images, etc.) provisioning services, application services, storage services, contextual information determination services, location-based services, information-based services (e.g., weather, news, etc.), etc. In one embodiment, the services 105 uses the output of the feature detection system 113 and/or mapping platform 107.

In one embodiment, the feature detection system 113 and/or mapping platform 107 may be a platform with multiple interconnected components. The feature detection system 113 and/or mapping platform 107 may include multiple servers, intelligent networking devices, computing devices, components, and corresponding software for automated detection and/or characterization of road intersections. In addition, it is noted that the feature detection system 113 and/or mapping platform 107 may be separate entities of the system 100, a part of the one or more services 105, a part of the services platform 103, or included within the vehicles 111.

In one embodiment, content providers 133 may provide content or data (e.g., including geographic data, 3D models, parametric representations of mapped features, etc.) to the mapping platform 107, the services platform 103, the services 105, and/or the vehicles 111. The content provided may be any type of content, such as feature detection data, DoT data, lane level road topology data, sensor data, map content, textual content, audio content, video content, image content, etc. used for detecting and/or characterizing road intersections. In one embodiment, the content providers 133 may also store content associated with the mapping platform 107, geographic database 101, services platform 103, services 105, and/or vehicle 111. In another embodiment, the content providers 133 may manage access to a central repository of data, and offer a consistent, standard interface to data, such as a repository of the geographic database 101.

In one optional embodiment, the vehicles 111 are configured with various sensors for generating or collecting sensor observations (e.g., for processing by the feature detection system 113 and/or mapping platform 107), related geographic data, etc. In one embodiment, the sensed data represents sensor data associated with a geographic location or coordinates at which the sensor data was collected to detect road boundaries of an intersection. In this way, the sensor data can act as observation data that can be processed using mesh triangulation according to the various embodiments described herein. By way of example, the sensors may include a global positioning sensor for gathering location data (e.g., GPS), a network detection sensor for detecting wireless signals or receivers for different short-range communications (e.g., Bluetooth, Wi-Fi, Li-Fi, near field communication (NFC) etc.), temporal information sensors, a camera/imaging sensor for gathering image data (e.g., the camera sensors may automatically capture road boundaries, road sign information, images of road obstructions, etc. for analysis), LiDAR, radar, an audio recorder for gathering audio data, velocity sensors mounted on steering wheels of the vehicles, switch sensors for determining whether one or more vehicle switches are engaged, and the like.

In another optional embodiment, the communication network 131 of system 100 includes one or more networks such as a data network, a wireless network, a telephony network, or any combination thereof. It is contemplated that the data network may be any local area network (LAN), metropolitan area network (MAN), wide area network (WAN), a public data network (e.g., the Internet), short range wireless network, or any other suitable packet-switched network, such as a commercially owned, proprietary packet-switched network, e.g., a proprietary cable or fiber-optic network, and the like, or any combination thereof. In addition, the wireless network may be, for example, a cellular network and may employ various technologies including enhanced data rates for global evolution (EDGE), general packet radio service (GPRS), global system for mobile communications (GSM), Internet protocol multimedia subsystem (IMS), universal mobile telecommunications system (UMTS), etc., as well as any other suitable wireless medium, e.g., worldwide interoperability for microwave access (WiMAX), 5G New Radio Networks, Long Term Evolution (LTE) networks, code division multiple access (CDMA), wideband code division multiple access (WCDMA), wireless fidelity (Wi-Fi), wireless LAN (WLAN), Bluetooth®, Internet Protocol (IP) data casting, satellite, mobile ad-hoc network (MANET), and the like, or any combination thereof.

By way of example, the feature detection system 113, mapping platform 107, services platform 103, services 105, vehicle 111, and/or content providers 133 optionally communicate with each other and other components of the system 100 using well known, new or still developing protocols. In this context, a protocol includes a set of rules defining how the network nodes within the communication network 131 interact with each other based on information sent over the communication links. The protocols are effective at different layers of operation within each node, from generating and receiving physical signals of various types, to selecting a link for transferring those signals, to the format of information indicated by those signals, to identifying which software application executing on a computer system sends or receives the information. The conceptually different layers of protocols for exchanging information over a network are described in the Open Systems Interconnection (OSI) Reference Model.

Communications between the network nodes are typically effected by exchanging discrete packets of data. Each packet typically comprises (1) header information associated with a particular protocol, and (2) payload information that follows the header information and contains information that may be processed independently of that particular protocol. In some protocols, the packet includes (3) trailer information following the payload and indicating the end of the payload information. The header includes information such as the source of the packet, its destination, the length of the payload, and other properties used by the protocol. Often, the data in the payload for the particular protocol includes a header and payload for a different protocol associated with a different, higher layer of the OSI Reference Model. The header for a particular protocol typically indicates a type for the next protocol contained in its payload. The higher layer protocol is said to be encapsulated in the lower layer protocol. The headers included in a packet traversing multiple heterogeneous networks, such as the Internet, typically include a physical (layer 1) header, a datalink (layer 2) header, an internetwork (layer 3) header and a transport (layer 4) header, and various application (layer 5, layer 6 and layer 7) headers as defined by the OSI Reference Model.

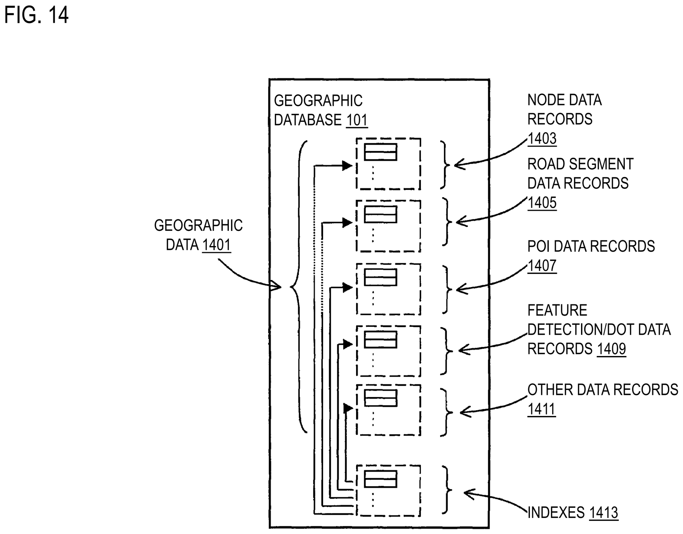

FIG. 14 is a diagram of the geographic database 101, according to one embodiment. In one embodiment, the geographic database 101 includes geographic data 1401 used for (or configured to be compiled to be used for) mapping and/or navigation-related services, such as for video odometry based on the parametric representation of signs include, e.g., encoding and/or decoding parametric representations into object models of signs. In one embodiment, geographic features (e.g., two-dimensional or three-dimensional features) are represented using polygons (e.g., two-dimensional features) or polygon extrusions (e.g., three-dimensional features). For example, the edges of the polygons correspond to the boundaries or edges of the respective geographic feature. In the case of a building, a two-dimensional polygon can be used to represent a footprint of the building, and a three-dimensional polygon extrusion can be used to represent the three-dimensional surfaces of the building. It is contemplated that although various embodiments are discussed with respect to two-dimensional polygons, it is contemplated that the embodiments are also applicable to three-dimensional polygon extrusions. Accordingly, the terms polygons and polygon extrusions as used herein can be used interchangeably.

In one embodiment, the following terminology applies to the representation of geographic features in the geographic database 101.

"Node" - A point that terminates a link.

"Line segment" - A straight line connecting two points.

"Link" (or "edge") - A contiguous, non-branching string of one or more line segments terminating in a node at each end.

"Shape point" - A point along a link between two nodes (e.g., used to alter a shape of the link without defining new nodes).

"Oriented link" - A link that has a starting node (referred to as the "reference node") and an ending node (referred to as the "non reference node").

"Simple polygon" - An interior area of an outer boundary formed by a string of oriented links that begins and ends in one node. In one embodiment, a simple polygon does not cross itself.

"Polygon" - An area bounded by an outer boundary and none or at least one interior boundary (e.g., a hole or island). In one embodiment, a polygon is constructed from one outer simple polygon and none or at least one inner simple polygon. A polygon is simple if it just consists of one simple polygon, or complex if it has at least one inner simple polygon.

In one embodiment, the geographic database 101 follows certain conventions. For example, links do not cross themselves and do not cross each other except at a node. Also, there are no duplicated shape points, nodes, or links. Two links that connect each other have a common node. In the geographic database 101, overlapping geographic features are represented by overlapping polygons. When polygons overlap, the boundary of one polygon crosses the boundary of the other polygon. In the geographic database 101, the location at which the boundary of one polygon intersects the boundary of another polygon is represented by a node. In one embodiment, a node may be used to represent other locations along the boundary of a polygon than a location at which the boundary of the polygon intersects the boundary of another polygon. In one embodiment, a shape point is not used to represent a point at which the boundary of a polygon intersects the boundary of another polygon.

As shown, the geographic database 101 includes node data records 1403, road segment or link data records 1405, POI data records 1407, feature detection/DoT data records 1409, other records 1411, and indexes 1413, for example. More, fewer, or different data records can be provided. In one embodiment, additional data records (not shown) can include cartographic ("carto") data records, routing data, and maneuver data. In one embodiment, the indexes 1413 may improve the speed of data retrieval operations in the geographic database 101. In one embodiment, the indexes 1413 may be used to quickly locate data without having to search every row in the geographic database 101 every time it is accessed. For example, in one embodiment, the indexes 1413 can be a spatial index of the polygon points associated with stored feature polygons.

In exemplary embodiments, the road segment data records 1405 are links or segments representing roads, streets, or paths, as can be used in the calculated route or recorded route information for determination of one or more personalized routes. The node data records 1403 are end points (such as intersections) corresponding to the respective links or segments of the road segment data records 1405. The road link data records 1405 and the node data records 1403 represent a road network, such as used by vehicles, cars, and/or other entities. Alternatively, the geographic database 101 can contain path segment and node data records or other data that represent pedestrian paths or areas in addition to or instead of the vehicle road record data, for example.

The road/link segments and nodes can be associated with attributes, such as geographic coordinates, street names, address ranges, speed limits, turn restrictions at intersections, and other navigation related attributes, as well as POIs, such as gasoline stations, hotels, restaurants, museums, stadiums, offices, automobile dealerships, auto repair shops, buildings, stores, parks, etc. The geographic database 101 can include data about the POIs and their respective locations in the POI data records 1407. The geographic database 101 can also include data about places, such as cities, towns, or other communities, and other geographic features, such as bodies of water, mountain ranges, etc. Such place or feature data can be part of the POI data records 1407 or can be associated with POIs or POI data records 1407 (such as a data point used for displaying or representing a position of a city).

In one embodiment, the geographic database 101 can also include feature detection/DoT data records 1409 for storing feature detection data 121, DoT data 129, and or any related data generated or used according to the various embodiments described herein. In one embodiment, the feature detection/DoT data records 1409 can be associated with one or more of the node records 1403, road segment records 1405, and/or POI data records 1407 to associate the detected and/or characterized intersections with specific geographic locations. In this way, the detected and/or characterized intersections can also be associated with the characteristics or metadata of the corresponding records 1403, 1405, and/or 1407.

In one embodiment, the geographic database 101 can be maintained by the content provider 133 in association with the services platform 103 (e.g., a map developer). The map developer can collect geographic data to generate and enhance the geographic database 101. There can be different ways used by the map developer to collect data. These ways can include obtaining data from other sources, such as municipalities or respective geographic authorities. In addition, the map developer can employ field personnel to travel by vehicle (e.g., vehicle) along roads throughout the geographic region to observe features and/or record information about them, for example. Also, remote sensing, such as aerial or satellite photography, can be used.

The geographic database 101 can be a master geographic database stored in a format that facilitates updating, maintenance, and development. For example, the master geographic database or data in the master geographic database can be in an Oracle spatial format or other spatial format, such as for development or production purposes. Map layers may be utilized. The Oracle spatial format or development/production database can be compiled into a delivery format, such as a geographic data files (GDF) format. The data in the production and/or delivery formats can be compiled or further compiled to form geographic database products or databases, which can be used in end user navigation devices or systems.

For example, geographic data is compiled (such as into a platform specification format (PSF) format) to organize and/or configure the data for performing navigation-related functions and/or services, such as route calculation, route guidance, map display, speed calculation, distance and travel time functions, and other functions, by a navigation device, such as by a vehicle 111, for example. The navigation-related functions can correspond to vehicle navigation, pedestrian navigation, or other types of navigation. The compilation to produce the end user databases can be performed by a party or entity separate from the map developer. For example, a customer of the map developer, such as a navigation device developer or other end user device developer, can perform compilation on a received geographic database in a delivery format to produce one or more compiled navigation databases.

The processes described herein for providing lane-level DoT detection from overhead imagery may be advantageously implemented via software, hardware (e.g., general processor, Digital Signal Processing (DSP) chip, an Application Specific Integrated Circuit (ASIC), Field Programmable Gate Arrays (FPGAs), etc.), firmware or a combination thereof. Such exemplary hardware for performing the described functions is detailed below.

Additionally, as used herein, the term 'circuitry' may refer to (a) hardware-only circuit implementations (for example, implementations in analog circuitry and/or digital circuitry); (b) combinations of circuits and computer program product(s) comprising software and/or firmware instructions stored on one or more computer readable memories that work together to cause an apparatus to perform one or more functions described herein; and (c) circuits, such as, for example, a microprocessor(s) or a portion of a microprocessor(s), that require software or firmware for operation even if the software or firmware is not physically present. This definition of 'circuitry' applies to all uses of this term herein, including in any claims. As a further example, as used herein, the term 'circuitry' also includes an implementation comprising one or more processors and/or portion(s) thereof and accompanying software and/or firmware. As another example, the term 'circuitry' as used herein also includes, for example, a baseband integrated circuit or applications processor integrated circuit for a mobile phone or a similar integrated circuit in a server, a cellular device, other network device, and/or other computing device.

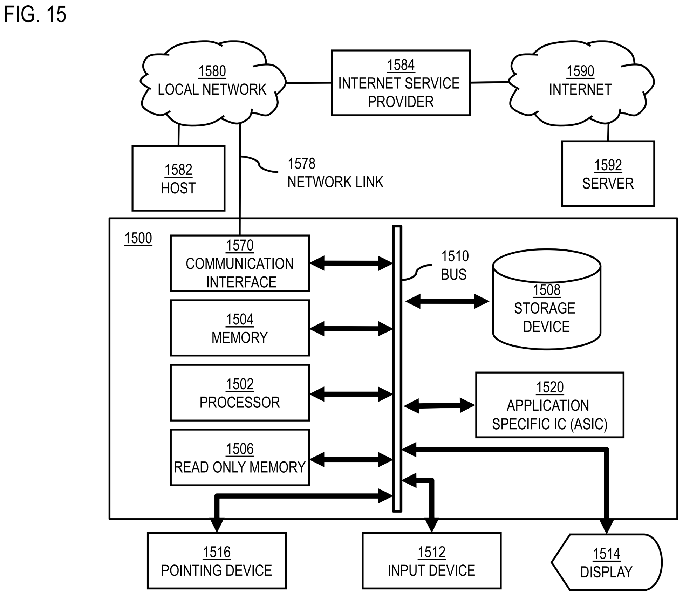

FIG. 15 illustrates a computer system 1500 upon which an embodiment of the invention may be implemented. Computer system 1500 is programmed (e.g., via computer program code or instructions) to provide lane-level DoT detection from overhead imagery as described herein and includes a communication mechanism such as a bus 1510 for passing information between other internal and external components of the computer system 1500. Information (also called data) is represented as a physical expression of a measurable phenomenon, typically electric voltages, but including, in other embodiments, such phenomena as magnetic, electromagnetic, pressure, chemical, biological, molecular, atomic, sub-atomic and quantum interactions. For example, north and south magnetic fields, or a zero and non-zero electric voltage, represent two states (0, 1) of a binary digit (bit). Other phenomena can represent digits of a higher base. A superposition of multiple simultaneous quantum states before measurement represents a quantum bit (qubit). A sequence of one or more digits constitutes digital data that is used to represent a number or code for a character. In some embodiments, information called analog data is represented by a near continuum of measurable values within a particular range.

A bus 1510 includes one or more parallel conductors of information so that information is transferred quickly among devices coupled to the bus 1510. One or more processors 1502 for processing information are coupled with the bus 1510.

A processor 1502 performs a set of operations on information as specified by computer program code related to providing lane-level DoT detection from overhead imagery. The computer program code is a set of instructions or statements providing instructions for the operation of the processor and/or the computer system to perform specified functions. The code, for example, may be written in a computer programming language that is compiled into a native instruction set of the processor. The code may also be written directly using the native instruction set (e.g., machine language). The set of operations includes bringing information in from the bus 1510 and placing information on the bus 1510. The set of operations also typically include comparing two or more units of information, shifting positions of units of information, and combining two or more units of information, such as by addition or multiplication or logical operations like OR, exclusive OR (XOR), and AND. Each operation of the set of operations that can be performed by the processor is represented to the processor by information called instructions, such as an operation code of one or more digits. A sequence of operations to be executed by the processor 1502, such as a sequence of operation codes, constitute processor instructions, also called computer system instructions or, simply, computer instructions. Processors may be implemented as mechanical, electrical, magnetic, optical, chemical or quantum components, among others, alone or in combination.

Computer system 1500 also includes a memory 1504 coupled to bus 1510. The memory 1504, such as a random access memory (RAM) or other dynamic storage device, stores information including processor instructions for providing lane-level DoT detection from overhead imagery. Dynamic memory allows information stored therein to be changed by the computer system 1500. RAM allows a unit of information stored at a location called a memory address to be stored and retrieved independently of information at neighboring addresses. The memory 1504 is also used by the processor 1502 to store temporary values during execution of processor instructions. The computer system 1500 also includes a read only memory (ROM) 1506 or other static storage device coupled to the bus 1510 for storing static information, including instructions, that is not changed by the computer system 1500. Some memory is composed of volatile storage that loses the information stored thereon when power is lost. Also coupled to bus 1510 is a nonvolatile (persistent) storage device 1508, such as a magnetic disk, optical disk or flash card, for storing information, including instructions, that persists even when the computer system 1500 is turned off or otherwise loses power.

Information, including instructions for providing lane-level DoT detection from overhead imagery, is provided to the bus 1510 for use by the processor from an external input device 1512, such as a keyboard containing alphanumeric keys operated by a human user, or a sensor. A sensor detects conditions in its vicinity and transforms those detections into physical expression compatible with the measurable phenomenon used to represent information in computer system 1500. Other external devices coupled to bus 1510, used primarily for interacting with humans, include a display device 1514, such as a cathode ray tube (CRT) or a liquid crystal display (LCD), or plasma screen or printer for presenting text or images, and a pointing device 1516, such as a mouse or a trackball or cursor direction keys, or motion sensor, for controlling a position of a small cursor image presented on the display 1514 and issuing commands associated with graphical elements presented on the display 1514. In some embodiments, for example, in embodiments in which the computer system 1500 performs all functions automatically without human input, one or more of external input device 1512, display device 1514 and pointing device 1516 is omitted.

In the illustrated embodiment, special purpose hardware, such as an application specific integrated circuit (ASIC) 1520, is coupled to bus 1510. The special purpose hardware is configured to perform operations not performed by processor 1502 quickly enough for special purposes. Examples of application specific ICs include graphics accelerator cards for generating images for display 1514, cryptographic boards for encrypting and decrypting messages sent over a network, speech recognition, and interfaces to special external devices, such as robotic arms and medical scanning equipment that repeatedly perform some complex sequence of operations that are more efficiently implemented in hardware.

Computer system 1500 also includes one or more instances of a communications interface 1570 coupled to bus 1510. Communication interface 1570 provides a one-way or two-way communication coupling to a variety of external devices that operate with their own processors, such as printers, scanners and external disks. In general the coupling is with a network link 1578 that is connected to a local network 1580 to which a variety of external devices with their own processors are connected. For example, communication interface 1570 may be a parallel port or a serial port or a universal serial bus (USB) port on a personal computer. In some embodiments, communications interface 1570 is an integrated services digital network (ISDN) card or a digital subscriber line (DSL) card or a telephone modem that provides an information communication connection to a corresponding type of telephone line. In some embodiments, a communication interface 1570 is a cable modem that converts signals on bus 1510 into signals for a communication connection over a coaxial cable or into optical signals for a communication connection over a fiber optic cable. As another example, communications interface 1570 may be a local area network (LAN) card to provide a data communication connection to a compatible LAN, such as Ethernet. Wireless links may also be implemented. For wireless links, the communications interface 1570 sends or receives or both sends and receives electrical, acoustic or electromagnetic signals, including infrared and optical signals, that carry information streams, such as digital data. For example, in wireless handheld devices, such as mobile telephones like cell phones, the communications interface 1570 includes a radio band electromagnetic transmitter and receiver called a radio transceiver. In certain embodiments, the communications interface 1570 enables connection to the communication network 131 for providing lane-level DoT detection from overhead imagery.

The term computer-readable medium is used herein to refer to any medium that participates in providing information to processor 1502, including instructions for execution. Such a medium may take many forms, including, but not limited to, non-volatile media, volatile media and transmission media. Non-volatile media include, for example, optical or magnetic disks, such as storage device 1508. Volatile media include, for example, dynamic memory 1504. Transmission media include, for example, coaxial cables, copper wire, fiber optic cables, and carrier waves that travel through space without wires or cables, such as acoustic waves and electromagnetic waves, including radio, optical and infrared waves. Signals include man-made transient variations in amplitude, frequency, phase, polarization or other physical properties transmitted through the transmission media. Common forms of computer-readable media include, for example, a floppy disk, a flexible disk, hard disk, magnetic tape, any other magnetic medium, a CD-ROM, CDRW, DVD, any other optical medium, punch cards, paper tape, optical mark sheets, any other physical medium with patterns of holes or other optically recognizable indicia, a RAM, a PROM, an EPROM, a FLASH-EPROM, any other memory chip or cartridge, a carrier wave, or any other medium from which a computer can read.

Network link 1578 typically provides information communication using transmission media through one or more networks to other devices that use or process the information. For example, network link 1578 may provide a connection through local network 1580 to a host computer 1582 or to equipment 1584 operated by an Internet Service Provider (ISP). ISP equipment 1584 in turn provides data communication services through the public, world-wide packet-switching communication network of networks now commonly referred to as the Internet 1590.

A computer called a server host 1592 connected to the Internet hosts a process that provides a service in response to information received over the Internet. For example, server host 1592 hosts a process that provides information representing video data for presentation at display 1514. It is contemplated that the components of the system can be deployed in various configurations within other computer systems, e.g., host 1582 and server 1592.

FIG. 16 illustrates a chip set 1600 upon which an embodiment of the invention may be implemented. Chip set 1600 is programmed to provide lane-level DoT detection from overhead imagery as described herein and includes, for instance, the processor and memory components described with respect to FIG. 15 incorporated in one or more physical packages (e.g., chips). By way of example, a physical package includes an arrangement of one or more materials, components, and/or wires on a structural assembly (e.g., a baseboard) to provide one or more characteristics such as physical strength, conservation of size, and/or limitation of electrical interaction. It is contemplated that in certain embodiments the chip set can be implemented in a single chip.

In one embodiment, the chip set 1600 includes a communication mechanism such as a bus 1601 for passing information among the components of the chip set 1600. A processor 1603 has connectivity to the bus 1601 to execute instructions and process information stored in, for example, a memory 1605. The processor 1603 may include one or more processing cores with each core configured to perform independently. A multi-core processor enables multiprocessing within a single physical package. Examples of a multi-core processor include two, four, eight, or greater numbers of processing cores. Alternatively or in addition, the processor 1603 may include one or more microprocessors configured in tandem via the bus 1601 to enable independent execution of instructions, pipelining, and multithreading. The processor 1603 may also be accompanied with one or more specialized components to perform certain processing functions and tasks such as one or more digital signal processors (DSP) 1607, or one or more application-specific integrated circuits (ASIC) 1609. A DSP 1607 typically is configured to process real-world signals (e.g., sound) in real time independently of the processor 1603. Similarly, an ASIC 1609 can be configured to perform specialized functions not easily performed by a general purposed processor. Other specialized components to aid in performing the inventive functions described herein include one or more field programmable gate arrays (FPGA) (not shown), one or more controllers (not shown), or one or more other special-purpose computer chips.

The processor 1603 and accompanying components have connectivity to the memory 1605 via the bus 1601. The memory 1605 includes both dynamic memory (e.g., RAM, magnetic disk, writable optical disk, etc.) and static memory (e.g., ROM, CD-ROM, etc.) for storing executable instructions that when executed perform the inventive steps described herein to provide lane-level DoT detection from overhead imagery. The memory 1605 also stores the data associated with or generated by the execution of the inventive steps.

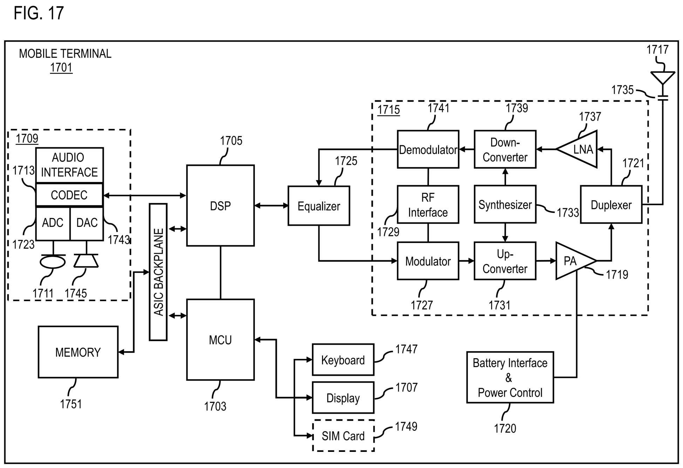

FIG. 17 is a diagram of exemplary components of a mobile terminal (e.g., handset) capable of operating in the system of FIG. 1, according to one embodiment. Generally, a radio receiver is often defined in terms of front-end and back-end characteristics. The front-end of the receiver encompasses all of the Radio Frequency (RF) circuitry whereas the back-end encompasses all of the base-band processing circuitry. Pertinent internal components of the telephone include a Main Control Unit (MCU) 1703, a Digital Signal Processor (DSP) 1705, and a receiver/transmitter unit including a microphone gain control unit and a speaker gain control unit. A main display unit 1707 provides a display to the user in support of various applications and mobile station functions that offer automatic contact matching. An audio function circuitry 1709 includes a microphone 1711 and microphone amplifier that amplifies the speech signal output from the microphone 1711. The amplified speech signal output from the microphone 1711 is fed to a coder/decoder (CODEC) 1713.

A radio section 1715 amplifies power and converts frequency in order to communicate with a base station, which is included in a mobile communication system, via antenna 1717. The power amplifier (PA) 1719 and the transmitter/-modulation circuitry are operationally responsive to the MCU 1703, with an output from the PA 1719 coupled to the duplexer 1721 or circulator or antenna switch, as known in the art. The PA 1719 also couples to a battery interface and power control unit 1720.

In use, a user of mobile station 1701 speaks into the microphone 1711 and his or her voice along with any detected background noise is converted into an analog voltage. The analog voltage is then converted into a digital signal through the Analog to Digital Converter (ADC) 1723. The control unit 1703 routes the digital signal into the DSP 1705 for processing therein, such as speech encoding, channel encoding, encrypting, and interleaving. In one embodiment, the processed voice signals are encoded, by units not separately shown, using a cellular transmission protocol such as global evolution (EDGE), general packet radio service (GPRS), global system for mobile communications (GSM), Internet protocol multimedia subsystem (IMS), universal mobile telecommunications system (UMTS), etc., as well as any other suitable wireless medium, e.g., microwave access (WiMAX), Long Term Evolution (LTE) networks, code division multiple access (CDMA), wireless fidelity (WiFi), satellite, and the like.

The encoded signals are then routed to an equalizer 1725 for compensation of any frequency-dependent impairments that occur during transmission though the air such as phase and amplitude distortion. After equalizing the bit stream, the modulator 1727 combines the signal with an RF signal generated in the RF interface 1729. The modulator 1727 generates a sine wave by way of frequency or phase modulation. In order to prepare the signal for transmission, an up-converter 1731 combines the sine wave output from the modulator 1727 with another sine wave generated by a synthesizer 1733 to achieve the desired frequency of transmission. The signal is then sent through a PA 1719 to increase the signal to an appropriate power level. In practical systems, the PA 1719 acts as a variable gain amplifier whose gain is controlled by the DSP 1705 from information received from a network base station. The signal is then filtered within the duplexer 1721 and optionally sent to an antenna coupler 1735 to match impedances to provide maximum power transfer. Finally, the signal is transmitted via antenna 1717 to a local base station. An automatic gain control (AGC) can be supplied to control the gain of the final stages of the receiver. The signals may be forwarded from there to a remote telephone which may be another cellular telephone, other mobile phone or a land-line connected to a Public Switched Telephone Network (PSTN), or other telephony networks.

Voice signals transmitted to the mobile station 1701 are received via antenna 1717 and immediately amplified by a low noise amplifier (LNA) 1737. A down-converter 1739 lowers the carrier frequency while the demodulator 1741 strips away the RF leaving only a digital bit stream. The signal then goes through the equalizer 1725 and is processed by the DSP 1705. A Digital to Analog Converter (DAC) 1743 converts the signal and the resulting output is transmitted to the user through the speaker 1745, all under control of a Main Control Unit (MCU) 1703-which can be implemented as a Central Processing Unit (CPU) (not shown).

The MCU 1703 receives various signals including input signals from the keyboard 1747. The keyboard 1747 and/or the MCU 1703 in combination with other user input components (e.g., the microphone 1711) comprise a user interface circuitry for managing user input. The MCU 1703 runs a user interface software to facilitate user control of at least some functions of the mobile station 1701 to provide lane-level DoT detection from overhead imagery. The MCU 1703 also delivers a display command and a switch command to the display 1707 and to the speech output switching controller, respectively. Further, the MCU 1703 exchanges information with the DSP 1705 and can access an optionally incorporated SIM card 1749 and a memory 1751. In addition, the MCU 1703 executes various control functions required of the station. The DSP 1705 may, depending upon the implementation, perform any of a variety of conventional digital processing functions on the voice signals. Additionally, DSP 1705 determines the background noise level of the local environment from the signals detected by microphone 1711 and sets the gain of microphone 1711 to a level selected to compensate for the natural tendency of the user of the mobile station 1701.

The CODEC 1713 includes the ADC 1723 and DAC 1743. The memory 1751 stores various data including call incoming tone data and is capable of storing other data including music data received via, e.g., the global Internet. The software module could reside in RAM memory, flash memory, registers, or any other form of writable computer-readable storage medium known in the art including non-transitory computer-readable storage medium. For example, the memory device 1751 may be, but not limited to, a single memory, CD, DVD, ROM, RAM, EEPROM, optical storage, or any other non-volatile or non-transitory storage medium capable of storing digital data.

An optionally incorporated SIM card 1749 carries, for instance, important information, such as the cellular phone number, the carrier supplying service, subscription details, and security information. The SIM card 1749 serves primarily to identify the mobile station 1701 on a radio network. The card 1749 also contains a memory for storing a personal telephone number registry, text messages, and user specific mobile station settings.

While the invention has been described in connection with a number of embodiments and implementations, the invention is not so limited but covers various obvious modifications and equivalent arrangements, which fall within the purview of the appended claims. Although features of the invention are expressed in certain combinations among the claims, it is contemplated that these features can be arranged in any combination and order.

## Claims

1. A method comprising:

    processing overhead imagery data of a road network to determine a plurality of features indicative of a direction of travel of at least one road lane of the road network, wherein each feature of the plurality of features indicates a candidate direction of travel;
    determining the direction of travel of the at least one road lane based on a weighted voting mechanism applied based on the candidate direction of travel of each feature, wherein the weighted voting mechanism weighs the candidate direction of travel of each feature based on a feature type of each feature; and
    associating the determined direction of travel as an attribute of the at least one road lane in a geographic database.

2. The method of claim 1, wherein the feature type includes a vehicle feature type, and wherein the vehicle feature type infers the candidate direction of travel based on one or more vehicles detected in the overhead imagery.

3. The method of claim 2, wherein the candidate direction of travel is determined based spatial relationship data between the one or more vehicles detected in the overhead imagery and a topology of the at least one road lane.

4. The method of claim 2, wherein the one or more vehicles detected in the overhead imagery are grouped into in-lane-vehicles and neighboring-vehicles; wherein the in-lane-vehicles comprise the one or more vehicles that have a feature shape inside a surface of the at least one road lane; and wherein the neighboring-vehicles comprise the one or more vehicles that intersect with the surface of the lane over a threshold portion or that are next to the at least one road lane without being on the surface of the at least one road lane; and wherein the direction of travel is determined further based on the in-lane-vehicles and the neighboring-vehicles.

5. The method of claim 4, wherein the direction of travel is determined further based on a weighted majority vote of the in-lane-vehicles and the neighboring-vehicles.

6. The method of claim 1, wherein the feature type includes a directional indication feature type, and wherein the directional indication feature type infers the candidate direction of travel based on one or more directional indication features that are detected on the at least one road lane in the overhead imagery.

7. The method of claim 6, wherein the directional indication feature includes a directional category marker, a road sign, or a combination thereof.

8. The method of claim 1, wherein the feature type includes a relative location type; and wherein the relative location type infers the candidate direction of travel based on a geospatial relationship between a lane geometry of the at least one road lane and one or more road features.

9. The method of claim 8, wherein the geospatial relationship is based on a pattern or a sequence of the one or more road features relative to the lane geometry.

10. The method of claim 8, wherein the one or more road features includes road marking feature.

11. The method of claim 10, wherein the road marking feature includes a stopline, a yield indication, a crosswalk, or a combination thereof.

12. The method of claim 10, further comprising:
grouping the stopline to the crosswalk, wherein the candidate direction of travel is based on a sequence of the stopline to the crosswalk in the grouping along a sequential direction of the at least one road lane.

13. An apparatus comprising:

at least one processor; and
at least one memory including computer program code for one or more programs,
the at least one memory and the computer program code configured to, with the at least one processor, cause the apparatus to:

process overhead imagery data of a road network to determine a plurality of features;
determine a pattern of features from the plurality of features;
determine a direction of travel based on the pattern of features; and
associate the determined direction of travel as an attribute of the at least one road lane in a geographic database.

14. The apparatus of claim 13, wherein the plurality of features groups a stopline feature to a crosswalk feature.

15. A non-transitory computer-readable storage medium, carrying one or more sequences of one or more instructions which, when executed by one or more processors, cause an apparatus to perform:

processing overhead imagery data of a road network to determine one or more features;
determining a relative location of each feature of the one or more features to the at least one road lane;
determining a direction of travel of the at least one road lane based on the relative location; and
associating the determined direction of travel as an attribute of the at least one road lane in a geographic database.

FIG. 1

FEATURE DETECTION SYSTEM
113

FEATURE EXTRACTION
MODULE 115

VOTING MODULE 127

119

100

ROAD
NETWORK 109

IMAGERY 117

111a

111n

FEATURE DETECTION DATA 121

VEHICLE
FEATURE
DATA 123

ROAD FEATURE
DATA 125

COMMUNICATION
NETWORK
131

SERVICES PLATFORM 103

SERVICE 105a

SERVICE 105m

MAPPING PLATFORM
107

DOT DATA 129

GEOGRAPHIC
DATABASE 101

CONTENT PROVIDER
133a

CONTENT PROVIDER
133k

FIG. 2A

Turn left in
65 ft from
2nd lane

201
203

FIG. 2B

211

213a    213b    213c    213d

FIG. 2C

225a    225b    225c

221

223a    223b    223b

FIG. 3

300

301 — PROCESS IMAGERY DATA TO DETERMINE FEATURES INDICATE OF DIRECTION OF TRAVEL (DOT)

303 — DETERMINE DOT OF ROAD LANE BASED ON VOTING MECHANISM

305 — ASSOCIATE DOT AS ATTRIBUTE OF ROAD LANE

FIG. 4

FIG. 5A

501

FIG. 5B

511

FIG. 5C

521

FIG. 5D

531

FIG. 6

(x[i+1], y[i+1])

605b

θ

Vehicle
heading
angle — 607

Forward
direction
609a —

d

111

Backward
direction
609b —

603

The closest lane
centerline segment to
an associated vehicle

(x[i], y[i])

605a

601

Road
CenterLine

## FIG. 7A

700

START

ASSOCIATED VEHICLES NOT EMPTY? 701

TRUE

ORIENTED VEHICLE = NEXT (ASSOCIATED VEHICLE) 713

FIND CLOSEST LANE CENTERLINE SEGMENT 715

COMPUTE FORWARD AND BACKWARD DIRECTION ANGLES 717

READ ORIENTED-VEHICLE'S HEADING ANGLE 719

READ ORIENTED-VEHICLE DETECTION CONFIDENCE 721

CONT.

FALSE

DOT SCORE>0 703

TRUE

DOT = FORWARD 705

FALSE

DOT SCORE<0 707

TRUE

DOT = BACKWARD 709

FALSE

DOT = UNKNOWN 711

END

## FIG. 7B

<u>700</u> CONT.

CONT.

723 — IN-LANE-VEHICLES?

TRUE → 725 — SET WEIGHT = IN-LANE-VEHICLE WEIGHT

FALSE →

727 — NEIGHBORING-VEHICLES?

TRUE →

FALSE →

729 — SET WEIGHT = NEIGHBORING-VEHICLES WEIGHT

731 — SET WEIGHT = 0.0

731 — COMPUTE ANGULAR DIFFERENCE BETWEEN HEADING AND FORWARD DIRECTION ANGLES

733 — COMPUTE ANGULAR DIFFERENCE BETWEEN HEADING AND BACKWARD DIRECTION ANGLES

CONT.

FIG. 7C

<u>700</u> CONT.

FIG. 8

801

803a — indicated heading direction

803b — indicated heading direction

805a — BUS — indicated heading direction

805b — indicated heading direction

807a — indicated heading direction

807b — indicated heading direction

FIG. 9A

FIG. 9B

FIG. 9C

FIG. 9D

FIG. 10A

1000  ( START )

1001 — DOT SCORE = 0

1003 — ASSOCIATE ROAD MARKING FEATURES TO LANE

1005 — GROUP STOPLINES TO CORRESPONDING CROSSWALKS

1007 — ASSOCIATED FEATURES NOT EMPTY?  FALSE  TRUE

1009 — DOT SCORE>0  FALSE  TRUE

1013 — DOT SCORE<0  TRUE

1011 — DOT = FORWARD

1015 — DOT = BACKWARD

END

1017 — ASSESS PATTERN BETWEEN STOPLINES AND CROSSWALKS

CONT.

## FIG. 10B

<u>1000</u> (CONT.)

```
                        ( CONT. )
                            │
                            ▼
       TRUE          ┌──────────────┐      FALSE
   ┌─────────────────│  STOPLINE TO │────────────┐
   │                 │  CROSSWALK?  │            │
   │                 └──────────────┘            ▼
   │                     1019          ┌──────────────────┐
   │                       TRUE        │  CROSSWALK TO    │   FALSE
   │                    ┌──────────────│    STOPLINE?     │──────────┐
   │                    │              └──────────────────┘          │
   │  1021              │  1025     1023                       1029   │
   ▼                    ▼                                             ▼
┌──────────────┐   ┌──────────────┐              ┌─────────────────────────┐
│ DOT VOTE=1.0 │   │ DOT VOTE=-1.0│              │ DOT SCORE += DOT VOTE * │
│(DOT FORWARD) │   │(DOT BACKWARD)│              │     DOT CONFIDENCE      │
└──────────────┘   └──────────────┘              └─────────────────────────┘
   │                    │                                  ▲            │
   │                    ▼                                  │            ▼
   │              ┌──────────────────┐                     │   ┌──────────────────┐
   │              │ DOT CONFIDENCE = │─────────────────────┘   │  REPEAT UNTIL    │
   └─────────────▶│ MIN(STOPLINE CONF.,│                       │ ASSOCIATED FEATURES │
                  │  CROSSWALK CONF.)│                         │ COLLECTION IS EMPTY │
                  └──────────────────┘                         └──────────────────┘
                     1027                                 1031
```

DOT VOTE = 1.0 (DOT FORWARD)

DOT VOTE = -1.0 (DOT BACKWARD)

DOT SCORE += DOT VOTE * DOT CONFIDENCE

DOT CONFIDENCE = MIN(STOPLINE CONF., CROSSWALK CONF.)

REPEAT UNTIL ASSOCIATED FEATURES COLLECTION IS EMPTY

FIG. 11A

1100 ( START )

1101 — DOT SCORE = 0

1103 — DEFINE BACKWARD LANE END SECTION ALONG LANE CENTERLINE

1105 — DEFINE FORWARD LANE END SECTION ALONG LANE CENTERLINE

1107 — ASSOCIATED STOPLINE FEATURES NOT EMPTY?

FALSE

TRUE

1109 — DOT SCORE>0

FALSE

TRUE

1113 — DOT SCORE<0

TRUE

1111 — DOT = FORWARD

1115 — DOT = BACKWARD

1117 — STOPLINE = NEXT ASSOCIATED STOPLINE FEATURE

( CONT. )

( END )

FIG. 11B

1100 (CONT.)

CONT.

STOPLINE INTERSECT FORWARD?
1119

TRUE — FALSE

STOPLINE INTERSECT BACKWARD?
1123

TRUE — FALSE

1121
DOT VOTE = 1.0 (DOT FORWARD)

1125
DOT VOTE = -1.0 (DOT BACKWARD)

1129
DOT SCORE += DOT VOTE * DOT CONFIDENCE

1127
DOT CONFIDENCE = STOPLINE CONFIDENCE

1131
REPEAT UNTIL ASSOCIATED STOPLINES COLLECTION IS EMPTY

FIG. 12

FIG. 13A

1301

FIG. 13B

1311

FIG. 13C

1321

1323

FIG. 13D

1331

1323

FIG. 14

GEOGRAPHIC
DATABASE 101

GEOGRAPHIC
DATA 1401

NODE DATA
RECORDS
1403

ROAD SEGMENT
DATA RECORDS
1405

POI DATA RECORDS
1407

FEATURE
DETECTION/DOT DATA
RECORDS 1409

OTHER DATA RECORDS
1411

INDEXES 1413

FIG. 15

FIG. 16

1600

PROCESSOR
1603

DSP 1607

ASIC 1609

BUS 1601

MEMORY 1605

FIG. 17

Europäisches
Patentamt
European
Patent Office
Office européen
des brevets

# EUROPEAN SEARCH REPORT

**Application Number**

EP 25 20 6776

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KR 2022 0013439 A (NAVER LABS CORP [KR]) 4 February 2022 (2022-02-04) | 1,6,7,14 | INV.<br>G01C21/00 |
| Y | * paragraphs [0001], [0008], [0011], | 2,3 | G06V20/56 |
| A | [0012], [0016] * | 4,5,8-12 | |
| | * paragraphs [0030] - [0042]; figures 1,2a,2b,3a-3c * | | |
| | * paragraphs [0069] - [0085]; figure 5 * | | |
| | ----- | | |
| A | US 2020/050854 A1 (CHENG GUANGLIANG [CN] ET AL) 13 February 2020 (2020-02-13) | 1-15 | |
| | * paragraphs [0006], [0007], [0061] - [0081]; figures 2,4 * | | |
| | ----- | | |
| Y | US 2023/222788 A1 (RODRIGUES JOSÉ FELIX [JP]) 13 July 2023 (2023-07-13) | 2,3 | |
| | * paragraphs [0027] - [0048]; figures 1,2a * | | |
| | ----- | | |

**TECHNICAL FIELDS SEARCHED (IPC)**

G01C
G06V
G06F
G06N

The present search report has been drawn up for all claims

| Place of search | Date of completion of the search | Examiner |
|---|---|---|
| The Hague | 16 February 2026 | Bruinsma, Maarten |

EPO FORM 1503 03.82 (P04C01)

## ANNEX TO THE EUROPEAN SEARCH REPORT
## ON EUROPEAN PATENT APPLICATION NO.

EP 25 20 6776

This annex lists the patent family members relating to the patent documents cited in the above-mentioned European search report.
The members are as contained in the European Patent Office EDP file on
The European Patent Office is in no way liable for these particulars which are merely given for the purpose of information.

16-02-2026

| Patent document cited in search report | Publication date | Patent family member(s) | Publication date |
|---|---|---|---|
| KR 20220013439 A | 04-02-2022 | KR 20210150805 A<br>KR 20220013439 A | 13-12-2021<br>04-02-2022 |
| US 2020050854 A1 | 13-02-2020 | CN 108230421 A<br>JP 6918139 B2<br>JP 2020520493 A<br>SG 11201909743Q A<br>US 2020050854 A1<br>WO 2019056845 A1 | 29-06-2018<br>11-08-2021<br>09-07-2020<br>28-11-2019<br>13-02-2020<br>28-03-2019 |
| US 2023222788 A1 | 13-07-2023 | CN 116468863 A<br>DE 102022135002 A1<br>JP 7454640 B2<br>JP 2023102765 A<br>US 2023222788 A1 | 21-07-2023<br>13-07-2023<br>22-03-2024<br>25-07-2023<br>13-07-2023 |

EPO FORM P0459

For more details about this annex : see Official Journal of the European Patent Office, No. 12/82